# EUROPEAN PATENT APPLICATION

(11) **EP 3 484 219 A1**
(43) Date of publication of application: **15.05.2019**
(21) Application number: 16908190.8
(22) Date of filing: 08.07.2016
(51) Int. Cl.: H04W 72/04

(54) **WIRELESS COMMUNICATION SYSTEM, BASE STATION, AND TERMINAL**

(71) Applicant: Fujitsu Limited, Kawasaki-shi, Kanagawa 211-8588 (JP)
(72) Inventor: NAKAMURA, Michiharu, Kawasaki-shi Kanagawa 211-8588 (JP); SHIMOMURA, Tsuyoshi, Kawasaki-shi Kanagawa 211-8588 (JP)
(74) Representative: Haseltine Lake LLP
(86) International application number: PCT/JP2016/070254
(87) International publication number: WO 2018/008146

(57) **Abstract**

A wireless communication system includes: a base station configured to set a first radio resource which is used for transfer of a first data signal, and a second radio resource of which at least a portion overlaps the first radio resource, the second radio resource having a likelihood of being used for transfer of a second data signal, to be in a radio frame format; a first terminal configured to transmit the second data signal to a destination that is the base station, using the second radio resource; and a second terminal configured to, when it is detected that a portion of the first radio source that is allocated from the base station, which overlaps the second radio resource, is used for the transmission of the second data signal, does not perform transmission of the first data signal, which uses the overlapping portion.

## Description

### FIELD

A technology that is described in the present specification relates to a wireless communication system, a base station, and a terminal.

### BACKGROUND

In a wireless communication system, such as LTE or LTE-Advanced (hereinafter collectively referred to as "LTE") in 3GPP, in a case where a terminal is going to transmit data to a destination that is a base station, in some cases, a request for allocation of a radio resource that is used for data transmission is made to the base station. If the base station allocates the radio resource to the terminal in response to the request, the terminal may perform data transmission to a destination that is the base station.

3GPP is short for "3rd Generation Partnership Project, and LTE is short for "Long Term Evolution.

### SUMMARY

### TECHNICAL PROBLEM

In some cases, data that is going to be transmitted to a destination that is the base station, for example, is higher urgency data than usual data. In some cases, low latency transfer of the high urgency data is requested.

In order to realize the low latency transfer, for example, it is considered that the base station regularly allocates a radio resource, which is used by the terminal for transmission of the high urgency data, to the terminal.

However, the high urgency data tends to occur only temporarily or unexpectedly in the terminal. For this reason, when a radio resource is regularly allocated for high urgency data, utilization efficiency of the radio resource in a wireless communication system may be remarkably decreased.

An object of an aspect of a technology that is described in the present specification is to achieve both low latency data transfer and an improvement in utilization efficiency of a radio resource in a wireless communication system.

### SOLUTION TO PROBLEM

According to an aspect of the technology, there is provided a wireless system that may include a base station, a first terminal, and a second terminal. The base station may set a first radio resource that is used for transfer of a first data signal, and a second radio resource having a likelihood of being used for the transfer of the second data signal to be in a radio frame format. At least a portion of the second radio resource may overlap the first radio resource. The first terminal may transmit the second data signal to a destination that is the base station, using the second radio resource. When it is detected that a portion of the first radio source that is allocated from the base station, which overlaps the second radio resource, is used for the transmission of the second data signal, the second terminal may not perform transmission of the first data signal, which uses the overlapping portion.

According to another aspect of the technology, there is provided a base station that may include a setting unit and a reception unit. The setting unit may set a first radio resource that is used for transfer of a first data signal, and a second radio resource having a likelihood of being used for the transfer of the second data signal to be in a radio frame format. At least a portion of the second radio resource may overlap the first radio resource. The reception unit may receive the second data signal that the first terminal transmits using the second radio resource. The reception unit may not perform reception processing of the first data signal in a portion of the first wireless resource that is allocated to a second terminal, which overlaps the second radio source.

According to still another aspect of the technology, there is provided a terminal that may include a transmission unit and a control unit. The transmission unit may transmit a first data signal to a destination that is a base station, using a first radio resource that is allocated in a radio frame format by the base station. The control unit may control the transmission unit in such a manner that the transmission of the first data signal which uses an overlapping portion is not performed, when it is detected that the portion of the first radio resource, which is set by the base station to be in the radio frame format, and which overlaps a second radio resource having a likelihood of being used for transfer of a second data signal, is used for transmission of the second data signal.

### ADVANTAGEOUS EFFECTS OF INVENTION

According to the aspect of the technology, in a wireless communication system, both low latency data transmission and an improvement in utilization efficiency of a radio resource may be achieved.

The object and advantages of the invention will be realized and attained by means of the elements and combinations particularly pointed out in the claims.

It is to be understood that both the foregoing general description and the following detailed description are exemplary and explanatory and are not restrictive of the invention.

### BRIEF DESCRIPTION OF DRAWINGS

FIG. 1 is a block diagram illustrating an example of a configuration of a wireless communication system according to an embodiment.
FIG. 2 is a diagram illustrating an example (in the case of Time Division Duplex (TDD)) of radio allocation according to the embodiment.
FIG. 3 is a diagram illustrating an example (in the case of Frequency Division Duplex (FDD) of the radio resource according to the embodiment.
FIGs. 4A to 4D are diagrams, each schematically illustrating a variation in a positional relationship between two radio resources (R5 and R6) that are illustrated in FIGs. 2 and 3.
FIG. 5 is a sequence diagram illustrating an example of operation of the wireless communication system according to the embodiment.
FIG. 6 is a flowchart illustrating an example of operation of a base station according to the embodiment.
FIG. 7 is a flowchart illustrating an example of operation of a terminal according to the embodiment.
FIGs. 8A and 8B are a flowchart illustrating an example of the operation by the terminal according to the embodiment.
FIG. 9 is a diagram for schematically describing an example of a design of a radio resource (R3) that is illustrated in FIGs. 2 and 3.
FIG. 10 is a diagram schematically illustrating addition of a cyclic prefix (CP).
FIGs. 11A to 11E are diagrams, each for schematically describing a variation in a signal that indicates an approval of transmission of special data according to the embodiment.
FIGs. 12A to 12C are diagrams, each illustrating an example of a format of a signal that reports information on a radio source that is associated with transmission of the special data according to the embodiment.
FIG. 13 is a diagram illustrating an example of any other format of the signal that reports the information on the radio resource that is associated with the transmission of the special data.
FIGs. 14A to 14C are diagrams, each for schematically describing an example of a method of indicating the information on the radio resource that is associated with the transmission of the special data according to the embodiment.
FIGs. 15A and 15B are diagrams, each for schematically describing any other example of the method of indicating the radio resource that is associated with the transmission of the special data according to the embodiment.
FIG. 16 is a diagram illustrating an example (in the case of TDD) of allocation of a radio resource according to a first modification example of the embodiment.
FIG. 17 is a diagram illustrating an example (in the case of TDD) of a radio resource according to a second modification example of the embodiment.
FIG. 18 is a block diagram illustrating an example of a configuration of the base station according to the embodiment.
FIG. 19 is a block diagram illustrating an example of a configuration of the terminal according to the embodiment.
FIG. 20 is a block diagram illustrating an example of the configuration of the terminal according to the embodiment.
FIG. 21 is a sequence diagram illustrating an example of a procedure for a change from a state where the terminal is idle to a state where the terminal is connected to the base station.
FIG. 22 is a sequence diagram illustrating an example of a procedure for a change from a state where the terminal transmits a scheduling request (SR) signal to a state where the base station to a state where transmission of data to the base station is possible.

### DESCRIPTION OF EMBODIMENTS

Embodiments will be described below with reference to the drawings. However, the embodiments that will be described below are given as only examples, and this is not intended to exclude various modifications or applications of the technology that will not be specified below. Various exemplary embodiments that will be described below may be implemented in suitable combinations. In the drawings that are referred to when the embodiments are described below, are portions that are given the same reference numeral are the same or similar, except as otherwise specified.

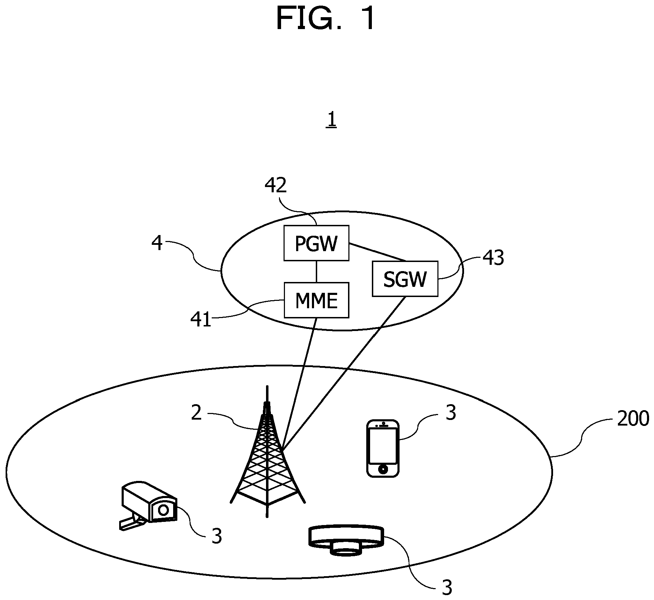

FIG. 1 is a block diagram illustrating an example of a configuration of a wireless communication system according to an embodiment. A wireless communication system 1 that is illustrated in FIG. 1 may illustratively include a base station 2 and a wireless terminal 3. In an example in FIG. 1, a focus is on one base station 2 and one wireless terminal 3, but two or more base stations 2 or wireless terminals 3 may be present in the wireless communication system 1.

The base station 2 may be illustratively connected to a core network 4. The core network 4 may be referred to as a "backbone network 4", and may be referred to as a "high-level network 4".

It is possible that the wireless terminal (hereinafter referred to "terminal" in some cases) 3 wirelessly communicates with the base station 2 in a wireless area 200 that is formed, or is provided, by the base station 2. The "wireless terminal" may be referred to as "wireless device", "wireless apparatus" or "terminal apparatus", or the like.

The terminal 3 may be a fixed terminal of which a position does not change and may be a mobile terminal (which may be referred to as "mobile equipment") of which a position changes.

As a non-limited example, the terminal 3 may be UE, such as a portable telephone, a smart phone, a tablet terminal. The "UE" is short for "user equipment".

The terminal 3 may be an Internet of Things (IoT) terminal. With the IoT, various "things" may have communication functions. The various "things" that have the communication functions may make a connection to the Internet, a wireless access network, or the like and thus perform communication.

For example, IoT terminals include a sensor device, a meter (an instrument), and the like which have wireless communication functions. A monitoring apparatus, such as a monitoring camera or a fire alarm that has a sensor device or a meter, may correspond to the terminal 3.

For convenience wireless communication between the base station 2 and the terminal 3 may be referred to as "cellular communication". A wireless communication scheme that complies with LTE may be illustratively applied to the "cellular communication".

In some cases, wireless communication between the terminal 3, which is the IoT terminal such as a monitoring apparatus, and the base station 2 is referred to a machine type communication (MTC), and, in some cases, the terminal 3 is referred to as "MTC device". The IoT terminal or the MTC device may be understood as an example of the UE.

The base station 2 forms or provides the wireless area 200 where wireless communication with the terminal 3 is set to be available. The "wireless area" may be referred to as "cell", "coverage area", "communication area", "service area", or the like.

The base station 2 may be illustratively an "eNB" that complies with LTE. The "eNB" is short for "evolved Node B". A communication point which is referred to as remote radio equipment (RRE), a remote radio head (RRH), or the like and which is separated from a main body of the base station and is positioned at a remote location may correspond to the base station 2. An apparatus that relays a signal which is transmitted and received by the terminal 3, for example, a relay node (RN) in LTE may correspond to the base station 2.

The "cell" that is formed or provided by the base station 2 may be divided into "selector cells". The "cells" may include a macro cell and a small cell. The small cell is an example of a cell that has a smaller communication-available range than the macro cell.

The small cell may have a name that varies according to the coverage area. For example, the small cell may be referred to as "femto cell", "pico cell", "macro cell", "nano cell", "metro cell", "home cell", or the like.

The core network 4, as illustrated in FIG. 1, may include an MME 41, a PGW 42, and an SGW 43. The "MME" is short for "Mobility Management Entity". The "PGW" is short for "Packet Data Network Gateway, and the "SGW" is short for "Serving Gateway".

The core network 4 may be understood as being a "high-level network" with respect to the base station 2. The MME 41, the PGW 42, and the SGW 43 may be understood as elements (NEs) or entities of the "core network" and may be collectively referred to as "core node". The "core node" may be equivalent to a "high node with respect to the base station 2.

The base station 2 may be connected to the core network 4 using an "S1 interface" that is an example of a wired interface. However, the base station 2 may be connected to the core network 4 in a manner that enables communication using the wired interface.

A network that includes the base station 2 and the core network 4 may be referred to as a radio access network (RAN). An example of the RAN is an Evolved Universal Terrestrial Radio Access Network (E-UTRAN).

The base station 2 may be illustratively connected to the MME 41 and the SGW 43 in a manner that enables communication. The base station 2 may be connected between the MME 41 and the SGW 43 in a manner that enables communication using an interface which is referred to as the S1 interface.

The SGW 43 may be connected to the PGW 42 in a manner that enables communication using an interface which is referred to as an S5 interface. The PGW 42 may be connected to a packet data network (PDN) such as the Internet or an intranet in a manner that enables communication.

It is possible that transmission and reception of user data are possible between the terminal 3 and the PDN through the PGW 42 and the SGW 43. The user packet is an example of user data, and may be referred to as a user plane signal.

The SGW 43 may illustratively process the SGW 43. The user plane signal may be processed by the MME 41. The SGW 43 may be connected to the MME 41 using an interface that is referred to as an S11 interface.

The MME 41 illustratively manages a positional information on the terminal 3. Based on the positional information that is managed by the MME 41, for example, the SGW 43 may perform operation control such as bus switching of the user plane signal that accompanies movement of the terminal 3. The operation control may include control that accompanies a handover of the terminal 3.

Although not illustrated in FIG. 1, in a case where multiple base stations 2 are present in the RAN, for example, a connection may be made between of each of the multiple base stations 2 in a manner that enables communication using an inter-base station interface which is referred to as an X2 interface. The inter-base station interface may be a wired interface and may be a wireless interface.

The wireless area 200, which is formed by the eNB 2 that is an example of the base station 2, may be referred to as "macro cell". The eNB 2 that forms a macro cell 200 may be referred to as "macro base station", "macro eNB", "MeNB", or the like for convenience. The "small cell" that has narrower coverage than the macro cell may be positioned (overlaid).

The eNB 2 may control setting (which may be referred to as "allocation") of a radio resource that is used for wireless communication with UE 3. The control may be referred to as "scheduling". The radio resources (hereinafter also referred to "resources" for short) may be illustratively two-dimensionally divided into a frequency domain and a time domain for distinction.

The eNB 2 may perform resource allocation of radio resources that are available for the wireless communication with the UE 3, based on time and time grids that result from two-dimensional division into the frequency domain and the time domain for distinction. In some cases, the performing of the resource allocation refers to "scheduling". In LTE, a unit of scheduling is referred to as a resource block (RB).

The RB is equivalent to one block that results from dividing radio resources that are available to the eNB 2 for the wireless communication with the UE 3, based on a slot in the time domain and of adjacent multiple subcarriers (carrier waves) in the frequency domain.

For example, in LTE, one slot has a time length of 0.5 ms. One subframe with a length of 1 ms is configured with two slots and a radio frame with a length of 10 ms is configured with 10 subframes. The RB, for example, is expressed as two slots (= one subframe) × 12 subcarriers.

Any one of Time Division Duplex (TDD) and Frequency Division Duplex (FDD) may be applied for wireless communication between the eNB 2 and the UE 3.

In TDD, downlink (DL) communication and uplink (UL) communication are performed at different times using one frequency (or one frequency band).

For example, the eNB 2 schedules a time for DL communication and a time for UL communication in one frequency band, at different times, for the UE 3.

Therefore, the eNB 2 and the UE 3 perform transmission and reception in one frequency band at different times.

In contrast to this, in FDD, the DL communication and the UL transmission are performed using different frequencies (or frequency bands).

For example, the eNB 2 may schedule a frequency for the DL communication and a frequency for the UL communication different frequencies regardless of a communication timing.

Therefore, the eNB 2 and the UE 3 may perform reception using a different frequency from a transmission frequency while performing transmission.

The eNB 2 allocates a resource for UL data transmission to each of the multiple terminals 3 in an individual and exclusive manner. Therefore, multiple terminals 3 do not compete with each other for resources that are to be used for the UL data transmission, and each of the terminals 3 may perform UL communication with the base station 2 without any occurrence of a collision with any other terminal 3.

In some cases, at a point in time when data (which may be referred to as "data signal") that is to be transmitted to a destination that is the base station 2 occurs in the terminal 3, a UL resource is not allocated to the terminal 3.

For example, when the base station 2 is initially accessed, such as immediately after the terminal 3 is powered on, the terminal 3 is in a state where the UL resource is not allocated. The terminal 3 is in the state where a UL resource is not allocated, even in a case where the terminal 3 performs data transmission in a state (which may be referred to as "idle state") where a connection to the base station 2 is established, where the connection is then released, and where the UL resource is released.

Several non-limited case examples in which it is a likelihood that the UL resource will not be allocated to the terminal 3 are given as follows.
(1) Case where the terminal 3 that is a portable telephone or a smartphone starts to make a call
(2) Case where, after interrupting communication temporarily while web browsing is being performed in the terminal 3, the user operates the terminal 3 and thus requests data on the next page
(3) Case wherein the terminal 3 that is a sensor device is prepared for transmission of sensed data and thus is going to start the data transmission
(4) Case wherein the terminal 3 that is a monitoring apparatus such as a monitoring camera or a fire alarm senses a suspicious person or detects an abnormality such as occurrence of a fire

As in the cases described above, although the terminal 3 is going to transmit data to a destination that is the base station 2, if a resource for data transmission is not allocated, the terminal 3 makes a request to the base station 2 for allocation of a resource for the data transmission.

In TS 36.300 "Overall description; Stage 2" that are standards for wireless communication systems, which are specified by 3GPP, states a random procedure (RA) for making a request to the base station 2 for allocation of a resource for the terminal 3 to transmit data to a destination that is the base station 2.

According to the RA procedure, the terminal 3 first transmits an RA preamble, and when receiving the RA preamble, the base station 2 replies to a destination that is the terminal 3, with an RA response. At this stage, there is a likelihood that the RA preamble that is received by the terminal 3 will be in competition, and because of this, the base station 2 does not specify which terminal 3 the base station 2 performs communicate with.

The terminal 3 transmits a connection request signal, which includes an identifier (ID) that possibly the terminal 3, to a destination that is the base station 2, and the base station 2 starts a procedure for setting the terminal 3 to be in a connected state, using the received ID.

After starting a connection procedure that includes the ID of the terminal 3 and thus being in the connected state, the terminal 3 transmits a scheduling request (SR) to a destination that is the base station 2.

When receiving an SR signal from the terminal 3, the base station 2 schedules a resource for the terminal 3 to use for the data transmission. If the scheduling succeeds, the base station 2 transmits a transmission approval (a UL grant) to a transmission destination of the SR that is the terminal 3, and thus notifies the terminal 3 of resource allocation information that is a result of the scheduling.

The terminal 3 receives the transmission approval from the base station 2, and thus possibly performs the UL data transmission using a resource that is allocated.

In a case where the RA preamble is in competition, although, with regard to the RA response, the terminal 3 transmits the connection request signal, which includes the ID of the terminal 3, to a destination that is the base station 2, in some cases, a procedure for connection for the ID is not started. In such a case, the terminal 3 restarts the RA procedure from the transmission of the RA preamble.

A procedure including and up to a stage where the connected state is entered, even in a case where the terminal 3 is in the state of being connected to the base station 2, the terminal 3 re-executes a procedure subsequent to a stage where the SR is transmitted.

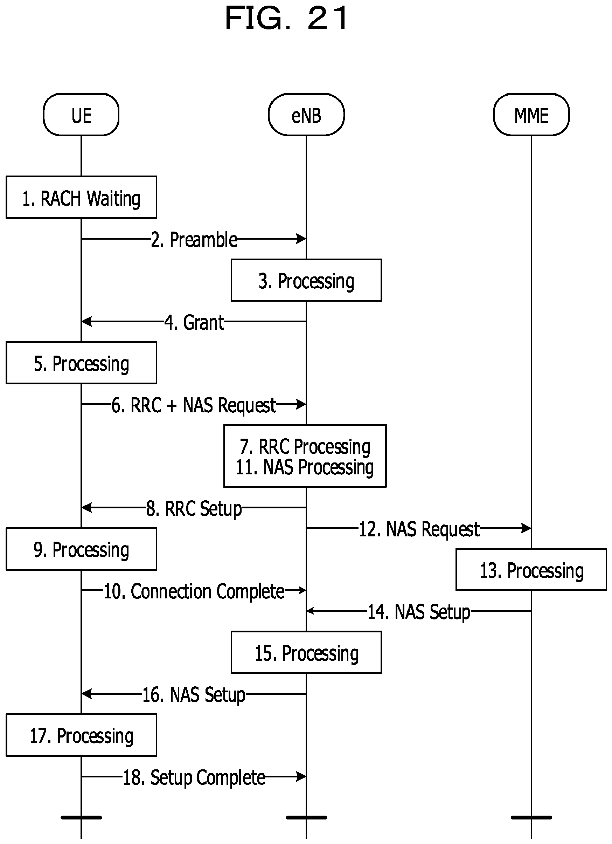

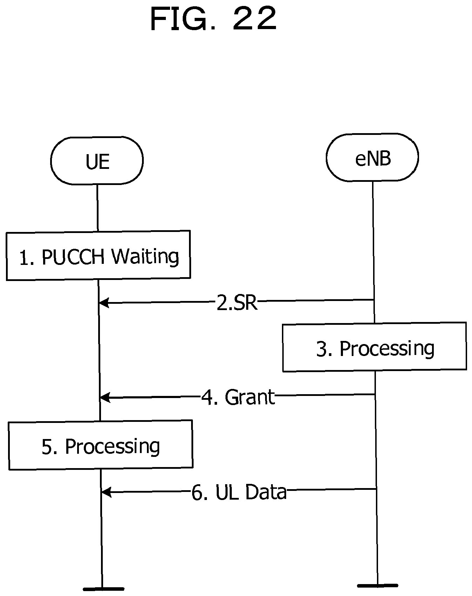

FIG. 21 illustrates an example of a procedure from a change from a stage where the UE is idle to a stage where the UE is connected to the eNB. FIG. 22 illustrates an example of a procedure for a change from a stage where the UE transmits a scheduling request (SR) signal to the eNB to a stage where data transmission to the eNB is possible. FIGs. 21 and 22 are diagrams that are cited from 3GPP TR 36.912.

Incidentally, regarding the case example in which the terminal 3 is any monitoring apparatus, of the above-described case examples in which the terminal 3 makes a request to the base station 2 for allocation of the resource for the data transmission, in some cases, it is requested that after the abnormality is sensed, a notification is quickly provided.

For example, the case example "Pre-crash Sensing Warning" is stated in "Study on LTE Support for V2X Services" in 3GPP TR22.885. The case example states that, when a motor vehicle senses that collision is difficult to avoid, it is desirable to perform data transfer within 20 ms in order to alert a person in the vicinity to such information.

However, "Feasibility study for Further Advancements for E-UTRA (LTE-Advanced)" in 3GPP TR36.912 reports that the time that it takes for the terminal 3 to be in the connected state is 50 ms. It is reported that the time that it takes for the terminal 3 to possibly perform the data transmission after transmitting the SR is 9.5 ms.

In a case where competition occurs for the transmission of the RA preamble and thus the connection procedure fails to be performed, the transmission of the RA preamble is restarted. Because of this, there is a likelihood that the time that it takes for the terminal 3 to possibly transmit data to a destination that is the base station 2 will be longer than the times described above.

Accordingly, for example, if a resource for the UL data transmission is regularly allocated to the terminal 3, due to the occurrence of the transmission data, the terminal 3 may perform UL transmission using the resource. Because of this, low latency data transmission is possible.

However, it is considered that an abnormality which is detected by the terminal 3 such as a monitoring apparatus not only occurs all the times, but also occurs temporarily or unexpectedly.

Nevertheless, the regular allocation of the resource for UL transmission data that occurs only temporarily or unexpectedly increases the probability that the resource will be wasted. Because of this, utilization efficiency of the resource may decrease.

In the following description, in some cases, the UL transmission data that occurs temporarily or unexpectedly is referred to as "unexpected data" for convenience. Data of which low latency transfer is requested, although it is unexpected data, may be referred to as "unexpected low latency data" for convenience.

In contrast with usual data, the "unexpected data" or the "unexpected low latency data" may be referred to as "special data" for convenience. The "special data" may be understood as being an example of high urgency data compared with the usual data. The usual data may be understood as being an example of low urgency data.

The usual data is an example of a first data signal. The special data is an example of a second data signal, and is a signal that occurs less frequently than the first data signal and of which lower latency transfer is requested than the first data signal.

However, the special data that is an example of the second data signal may correspond to one of a data signal that occurs less frequently than the usual data that is an example of the first data signal and a data signal of which low latency transfer is requested.

In order to avoid or suppress a decrease in the utilization efficiency of the resource as described above, in the wireless communication system 1 according to the present embodiment, at least a portion of the resource that is allocable to the terminal 3 is set and secured as a "resource associated with the transmission of the special data".

A resource that is included in the "resources associated with the transmission of the special data" is not limited to a resource that has a likelihood of being used by the terminal 3 for the transmission of the special data, and a resource that has a likelihood of being used in a procedure that is executed until the terminal 3 possibly transmits to the special data to the base station 2 may be included as well.

For example, three types of resources that will be described below as examples may be included in the "resources associated with the transmission of the special data".
(1) Resource that has a likelihood of being used for the terminal 3 to transmit a signal with which a request for an approval of the transmission of the special data is made to a destination that is the base station 2
(2) Resource that has a likelihood of being used for the base station 2 to transmit a signal indicating the approval of the transmission of the special data to the terminal 3
(3) Resource that has a likelihood of being for the terminal 3 to transmit the special data to a destination that is the base station 2

The "resource associated with the transmission of the special data" may be referred to as a resource that has a likelihood (the potential) of being used in association with the transmission of the special data. The "resource has a likelihood of being used", for example, means a resource that is allowed to be used to transmit any other signal which is not the special data in a case where the transmission of the special data is not desirable in the terminal 3.

For example, a resource that has a likelihood of being used in association with the transmission of the special data may be used preferentially for the transmission of any other signal that is not the special data, particularly in a case where the transmission of the special data is actually desirable in the terminal 3.

For this reason, for convenience, the resource that has a likelihood of being used in association with the transmission of the special data may be understood as being a resource of which the use is reserved in association with the transmission of the special data. For convenience, the resource may be referred to as "resource reserved for the special data" or "resource associated with the special data".

Therefore, the base station 2 may be allowed to allocate resources reserved for the special data or resources that include all of, or one or several of, the resources reserved for the special data to any one of the terminals 3 according to a usual resource allocation procedure.

The "usual resource allocation procedure" illustratively means a procedure in which resource allocation may be performed in the base station 2 without recognizing, or making a distinction between, whether or not a resource that is set to be allocated to the terminal 3 is the resource reserved for the special data.

The terminal 3 that is allocated a resource may perform communication with the base station 2 using the allocated resource. However, in a case where all of, or one or several of the allocated resources are actually used by any other terminal 3 in order to transmit the special data, the terminal 3 to which the sources are allocated may stop the UL data transmission.

Alternatively, if, of the resources that are allocated by the base station 2, a different resource that is not the same as the resource reserved for the special data is present, the terminal 3 may perform the UL data transmission using the resource.

By any other terminal 3 monitoring whether or not a signal that approves the transmission of the special data is transmitted from the base station 2 to a destination that is the terminal 3, it may be illustratively determined whether or not the resource reserved for the special data is actually used by the terminal 3.

Information on the resource reserved for the special data may be notified to the terminal 3 that is positioned in the wireless area 200 that is formed by the base station 2. A terminal that is included in notification targets is not limited to the terminal 3 that has a likelihood of transmitting the special data, and the terminal 3 that has a likelihood of being allocated the resources that include all of, or one or several of, the resources reserved for the special data, according to the usual resource allocation procedure, may be included as well. This is because there is a likelihood that the terminal 3 which is allocated the resources reserved for the special data will not use the resources for usual data transmission.

The notification of information on a resource that has a likelihood of being used by the terminal 3 for the transmission of the special data and information on a resource that has a likelihood of being used in a procedure which is executed until the terminal 3 may transmit the special data may be made in a manner that individually clarifies the pieces of information.

Alternatively, if both the sources are associated with each other, the information that is notified to the terminal 3 may be information on any one of both the sources. The information that is notified to the terminal 3 is information that is generated (the expression "processed" may be used) from the information on the resource reserved for the special data and may be information that indirectly (or implicitly) indicates the resource reserved from the special data.

The information on the resource reserved for the special data, which is notified to a destination that is the terminal 3 may be transmitted, as report information, from the base station 2. For example, the base station 2 may provide notification of the information on the resource reserved from the special data using a signal (which may be referred to as "report signal") in a report channel.

In the resource allocation procedure, the information on the resource reserved for the special data may be notified to the terminal 3 that has a likelihood of being allocated resources which include all of, or one or several of, the resources reserved for the special data, according to the usual resource allocation procedure.

For example, in a case where all of, or one or several of, the resources reserved for the special data are included in the resources that are allocated to the terminal 3, the base station 2 may assign information (for example, flag information) indicating the resource reserved for the special data to resource allocation information that is transmitted to a destination that is the terminal 3.

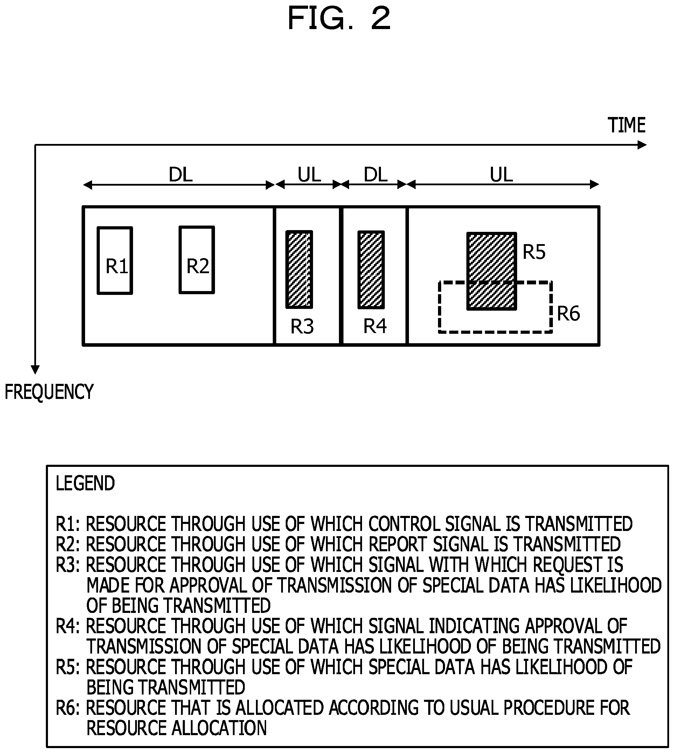

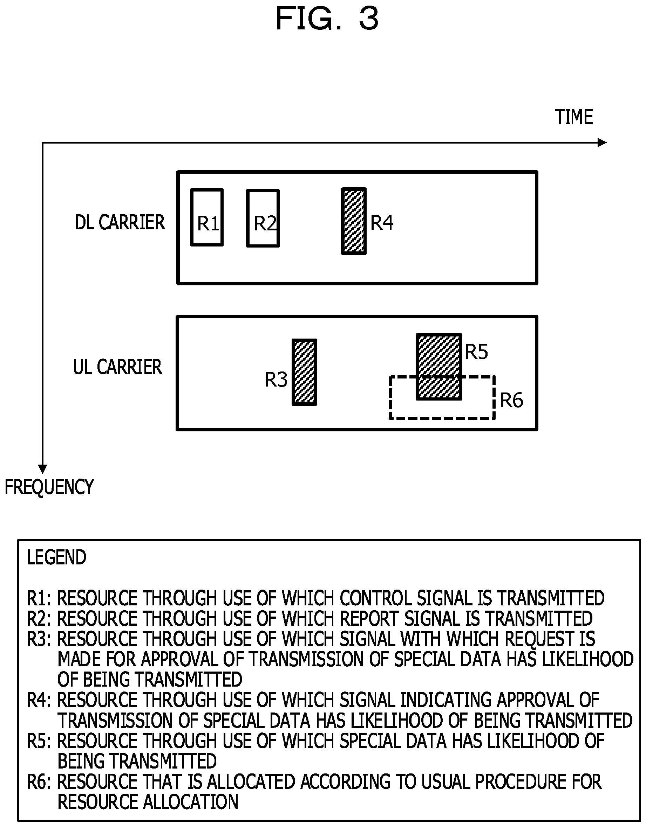

FIGs. 2 and 3 illustrate examples of a configuration (a format) of a radio frame that makes it possible to transmit the special data. FIG. 2 illustrates an example of a configuration of a radio frame that is based on Time Division Duplex (TDD), and FIG. 3 illustrates an example a configuration of a radio frame that is based on Frequency Division Duplex (FDD). The radio frame is used for communication in the wireless area 200.

In FIGs. 2 and 3, a resource that is indicated by R1 is illustratively a resource that is used for the base station 2 to a DL control signal (which may be referred to as "control message"). A resource R1 may be referred to as "control signal resource R1" for convenience.

A resource that is indicated by R2 is a resource that is used for the base station 2 to transmit the report signal to the wireless area 200. A resource R2 may be referred to as "report signal resource R2".

A resource that is indicated by R3 is a resource that has a likelihood of being used for the terminal 3 to transmit the signal with which a request is made to the base station 2 for the approval of the transmission of the special data. A resource R3 may be referred to as "special data transmission approval request resource R3" for convenience.

A resource that is indicated by R4 is a resource that has a likelihood of being used for the base station 2 to transmit the signal indicating the approval of the transmission of the special data to a destination that is the terminal 3. A resource R4 may be referred to as "special data transmission approval resource R4" for convenience.

A resource that is indicated by R5 is a resource that has a likelihood of being used for the terminal 3 to transmit the special data to a destination that is the base station 2. The resource R5 may be referred to as "special data transmission resource R5" for convenience.

A resource that is indicated by R6 is the UL resource that is allocated according to the usual resource allocation procedure, and is a resource that is used for the terminal 3 to transmit the usual data that is not the special data, to a UL. In contrast with the special data transmission resource, a resource R6 may be referred to as "usual data transmission resource R6" for convenience.

A relationship may be established in which the special data transmission resource R5 and the usual data transmission resource R6 partly overlap each other as illustrated in FIGs. 2 and 3.

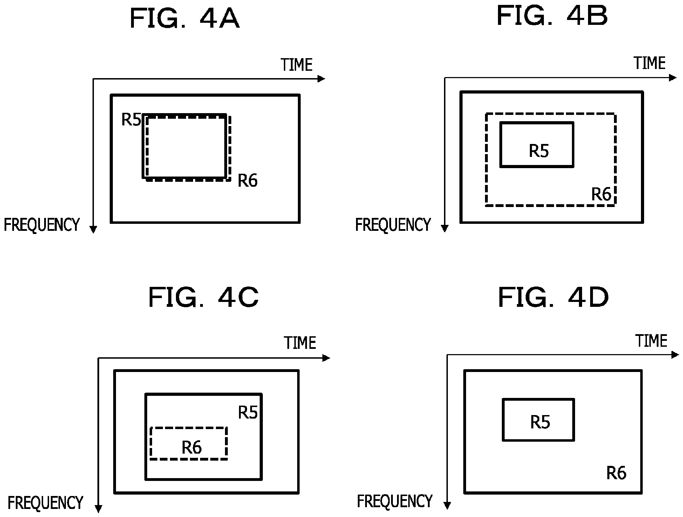

Alternatively, as illustrated in FIG. 4(A), the special data transmission resource R5 and the usual data transmission resource R6 may be the same resource. One of the special data transmission resource R5 and the usual data transmission resource R6 may include the other.

For example, as illustrated in FIG. 4(B), the entire special data transmission resource R5 may be included in the usual data transmission resource R6, and conversely, as illustrated in FIG. 4(C), the entire usual data transmission resource R6 may be included in the special data transmission resource R5.

One resource that includes the other may be limited to a portion of a resource that is allocable to the terminal 3 in the radio frame and may be over the entire allocable resource. For example, as illustrated in FIG. 4(D), the usual data transmission resource R6 that includes the special data transmission resource R5 may be over the entire UL resource that is allocable to the terminal 3 in the radio frame.

Conversely, as illustrated in FIG. 4(C), the special data transmission resource R5 that includes the usual data transmission resource R6 may be over the entire UL resource that is allocable to the terminal 3 in the radio frame.

The usual data transmission resource R6 is an example of a first radio resource and that the special data transmission resource R5 is a second radio resource. The special data transmission approval request resource R3 is an example of a third radio resource, and the special data transmission approval resource R4 is an example of a fourth radio resource.

With a control signal that is transmitted using the control signal resource R1, the base station 2 may notify the terminal 3 of information on the usual data transmission resource R6 that is allocated according to the usual resource allocation procedure, or may notify the terminal 3 of information on the report signal resource R2.

Information that indicates one or more settings of any one of the special data transmission approval request resource R3, the special data transmission approval resource R4, and the special data transmission resource R5, which are described above, is set, as the report information, to be in the report signal that is transmitted using the report signal resource R2.

A fixed association may be set in advance to be between each of all of, or several of, the resources R3 to R5. If information relating to the association is shared between the base station 2 and the terminal 3, only one or several of the pieces of information on the resources R3 to R5 may be set to be in the report signal.

If only one or several of the pieces of information on the resources R3 to R5 are reported to the wireless area 200, an improvement in utilization efficiency of a DL resource in the wireless area 200 may be achieved.

When the special data that is to be transmitted to a destination that is the base station 2 occurs in a certain terminal 3, the certain terminal 3 transmits the signal with which a request for the approval of the transmission of the special data is made to a destination that is the base station 2, using the special data transmission approval request resource R3.

The signal with which a request is made for the approval of the transmission of the special data may be referred to as "interrupt signal" for convenience. For this reason, the special data transmission approval request resource (R3) may be referred to as "interrupt signal transmission resource (R3)".

In a case where the interrupt signal is received or detected and thus the transmission approval request by the terminal 3 is approved, the base station 2 may transmit a signal indicating the approval of the transmission of the special data to a destination that is the terminal 3 which is a request source, using the special data transmission approval resource R4.

When the signal indicating the approval of the transmission of the special data from the base station 2 is received using the special data transmission approval resource R4, the terminal 3 may transmit the special data to a destination that is the base station 2, using the special data transmission resource R5.

Any other terminal 3 that is allocated the usual data transmission resource R6 may stop the UL data transmission and may perform the UL data transmission using any other resource that results from removing the special data transmission resource R5 from the usual data transmission resource R6.

The usual data transmission resource R6 partly overlaps the special data transmission approval request resource R3. Alternatively, a relationship may be established in which one of the usual data transmission resource R6 and the special data transmission approval request resource R3 include the other.

In a case where one of the usual data transmission resource R6 and the special data transmission approval request resource R3 includes the other, the interrupt signal that is transmitted with the resource R3 and a usual data signal that is transmitted with the resource R6 may collide with each other.

Even in a case where this collision may occur, for example, a transmission power or a coding rate for the interrupt signal that is transmitted with the resource R3 is set to be higher or to be lower, respectively, than with the resource R6, and thus it is possible that the interrupt signal is easy to detect in the base station 2. For example, a reception success ratio of the interrupt signal in the base station 2 may be improved.

### (Example of Operation of the Wireless Communication System 1)

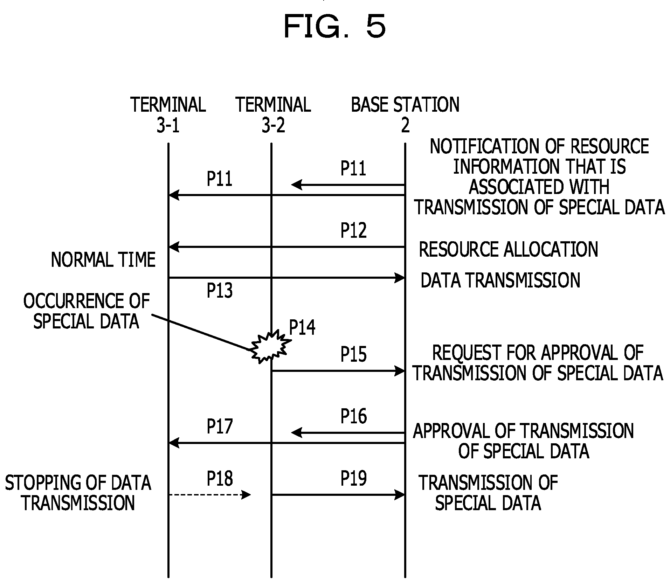

An example of operation of the wireless communication system 1 described above will be described with reference to FIG. 5. FIG. 5 is a sequence diagram illustrating the example of the operation of the wireless communication system 1.

As illustrated in FIG. 5, the base station 2 may set the information (which is illustratively each of the pieces of information on the resources R3 to R5 that are illustrated in FIG. 2 or 3) on the resource reserved for the special data to be, for example, in the report signal that is transmitted with the report signal resource R2, and may notify of terminals 3-1 to 3-2 of the information on the resource reserved for the special data (Processing P11). Any one of the terminal 3-1 and the terminal 3-2 is a terminal that is positioned in the wireless area 200 where communication with the base station 2 is available.

It is assumed that the terminal 3-2 is a terminal (a first terminal) that may transmit the special data, and that the terminal 3-1 is a terminal (a second terminal) that possibly changes UL data transmission processing in a case where the base station 2 approves the transmission of the special data by any other terminal 3-2.

When, as usual, the special data does not occur in the terminal 3-2, the terminal 3-1 may perform the UL data transmission (Processing P12 and Processing P13), using the usual data transmission resource R6 for the UL that is allocated from the base station 2 according to the usual resource allocation procedure.

On the other hand, when the special data occurs in the terminal 3-2 (Processing P14), the signal (the interrupt signal) with which a request is made for the approval of the transmission of the special data may be transmitted to a destination that is the base station 2 (Processing P15), using the special data transmission approval request resource R3 that is indicated by the report signal from the base station 2.

In a case where the signal with which a request is made for the approval of the transmission of the special data is received or detected and thus the transmission of the special data is approved, the base station 2 transmit the signal that indicates the approval of the transmission of the special data, to the terminal 3-2 that is a request source, using the special data transmission approval resource R4 (Processing P16).

Besides, the base station 2 may also transmit the signal that indicates the approval of the transmission of the special data to a destination of the terminal 3-1 that is allocated the usual data transmission resource R6 which overlaps the special data transmission resource R5, according to the usual resource allocation procedure (Processing P17).

The order in which Processing P16 and Processing P17 are performed does not matter, and Processing P16 and Processing P17 may be performed in parallel.

When the signal that indicates the approval of the transmission of the spacial data is received using the special data transmission approval resource R4, the terminal 3-2 may transmit the special data to a destination that is the base station 2, using the special data transmission resource R5 that is notified with the report signal in Processing P11 (Processing P18).

On the other hand, the terminal 3-1 that is allocated the usual data transmission resource R6 in the usual resource allocation procedure, for example, may monitor whether or not the signal that indicating the approval of the transmission of the special data is received, using the special data transmission approval resource R4.

When the reception of the signal that indicates the approval of the transmission of the special data, the terminal 3-1 may determine that the usual data transmission resource R6 that is allocated in the usual resource allocation procedure is the special data transmission resource R5, through the use of which the special data may be transmitted.

For example, in FIG. 2 or 3, the terminal 3-2 may determine that the usual data transmission resource R6 which overlaps the special data transmission resource R5 is allocated in the usual resource allocation procedure. In this case, the terminal 3-2 may stop the UL data transmission that uses the resource R6 in the usual resource allocation procedure (Processing P19).

Alternatively, for example, in FIG. 2 or 3, the terminal 3-2 may perform the UL data transmission using a resource that results from removing a portion that overlaps the special data transmission resource R5, from the allocated usual data transmission resource R6.

As described above, according to the embodiment described above, when the special data that is transmitted to the base station 2 occurs, the terminal 3-2 may transmit the special data using the special data transmission resource R5 that is set and secured by the base station 2 in the wireless area 200. Because of this, low latency transfer may be realized.

In a case where the special data transmission resource R5 is not a resource that is regularly secured for the transmission of the special data and is not used for the transmission of the special data, for example, the terminal 3-1 is allowed to use the special data transmission resource R5 for transmission of the usual data.

Therefore, a resource is regularly secured for the transmission of the special data that occurs only unexpectedly, and thus a decrease in the utilization efficiency of the resource may be avoided or suppressed. Consequently, in the wireless communication system 1, both the low latency data transfer and the improvement in the utilization efficiency of the resource may be achieved.

If there is a resource that does not overlap the special data transmission resource R5, of the allocated usual data transmission resource R6, the terminal 3-1 is allowed to transmit the usual data using the resource. Because of this, a decrease in throughput of the UL may be suppressed.

### (Example of Operation of the Base Station 2)

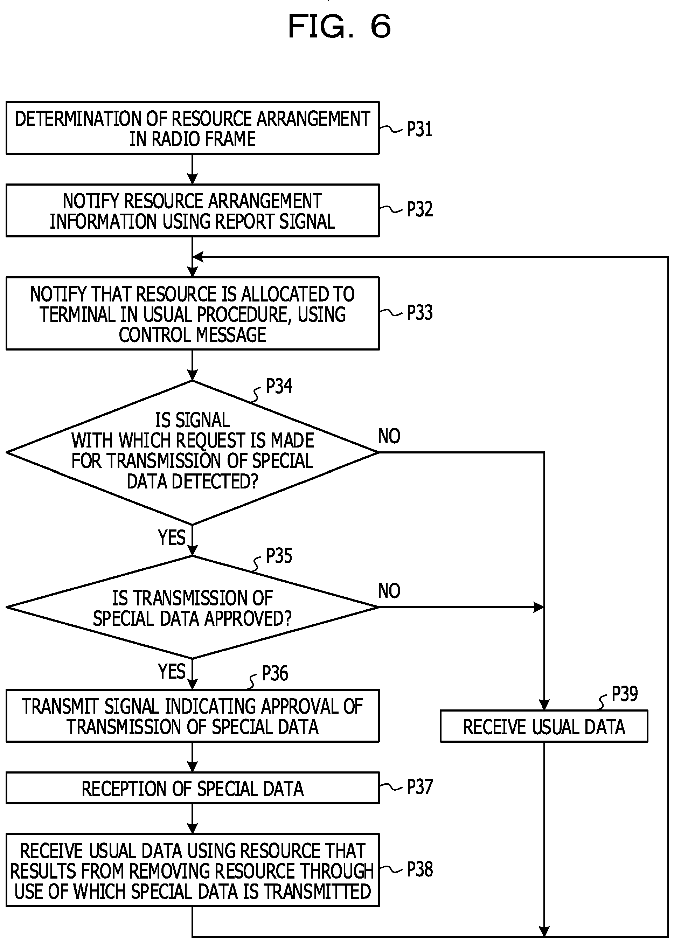

Next, an example of operation with a focus on the base station 2 in the wireless communication system 1 described above with reference to FIG. 6. FIG. 6 is a flowchart illustrating an example of the operation of the base station 2.

As illustrated in FIG. 6, the base station 2 may determine a source arrangement in the radio frame (Processing P31).

For example, as illustrated in FIG. 2 or 3, the base station 2 may determine an arrangement of the special data transmission approval request resource R3, the special data transmission approval resource R4, and the special data transmission resource R5 in the radio frame.

When the resource arrangement is determined, for example, with the report signal described above, the base station 2, for example, may notify each terminal 3, which is positioned in the wireless area 200 formed by the base station 2, of information that possibly specifies (or identifies) each of the resources R3 to R5 in the radio frame (Processing P32). The information that possibly specifies (or identifies) each of the resources R3 to R5 may be referred to as "resource arrangement information" for convenience.

The transmission of the report signal may be regular and may be irregular. As an Illustrative example, when it comes to the radio frame, every frame may not be necessarily transmitted regularly. For example, the report signal may be transmitted with a periodicity (for example, with a low frequency) that is longer than a transmission periodicity of the radio frame.

As described above, the information on the report signal resource R2 may be notified to the terminal 3 with the DL control signal, using the control signal resource R1.

In the normal time, the base station 2 may schedule the resource R6 that is used in order for one or more terminals 3 that are connected to the base station 2 to perform the UL data transmission, according to the usual resource allocation procedure. The "normal time" may be understood as meaning a state where the special data does not occur in any one of the terminals 3 that are connected to the base station 2.

When the scheduling succeeds, the base station 2 may notify the terminal 3 of allocation information on the resource R6 that is a result of the scheduling, for example, with the DL control signal (Processing P33). The control signal may be an individual control signal that is destined for an individual terminal 3.

Thereafter, the base station 2 receives the UL transmission data that the terminal 3, which is allocated the resource R6, transmits using the resource R6.

On the other hand, the base station 2 performs reception processing that uses the special data transmission approval request resource R3, and determines whether or not the signal with which a request is made for the approval of the transmission of the special data is received and detected (Processing P34).

If the signal with which a request is made for the approval of the transmission of the special data is received and detected using the resource R3 (YES in Processing P34), the base station 2 may determine whether or not the transmission of the special data is approved (Processing P35).

In a case where it is determined that the transmission of the special data is approved (YES in Processing P35), the base station 2 may transmit the signal that indicates the approval of the transmission of the special data, to a destination that is the terminal 3 which is a request source, using the special data transmission approval resource R4 (Processing P36).

Thereafter, the base station 2 may receive the special data that the terminal 3, which receives the signal that indicates the approval of the transmission of the special data, transmits using the special data transmission resource R5 (Processing P37).

The base station 2 may receive the usual data that a terminal 3 different from the terminal 3 which performs the transmission of the special data transmits using the usual data transmission resource R6 different from the special data transmission resource R5 (Processing P38).

For example, the base station 2 may not perform the reception processing of the usual data in the portion of the usual data transmission resource R6 that is allocated to the terminal 3, which overlaps the special data transmission resource R5.

The order in which Processing P37 and Processing P38 are performed does not matter, and Processing P37 and Processing P38 may be performed in parallel.

In Processing P34, in a case where the signal with which a request is made for the approval of the transmission of the special data is neither received nor detected (NO), the base station 2 may receive the usual data that terminal 3 transmits using the resource R6 which is allocated according to the usual resource allocation procedure (Processing P39).

In Processing P35, in a case where it is determined that the transmission of the special data is not approved (NO), the base station 2 may receive the usual data that the terminal 3 transmits using the usual data transmission resource R6 that is allocated according to the usual resource allocation procedure (Processing P39).

### (Example of Operation of the Terminal 3)

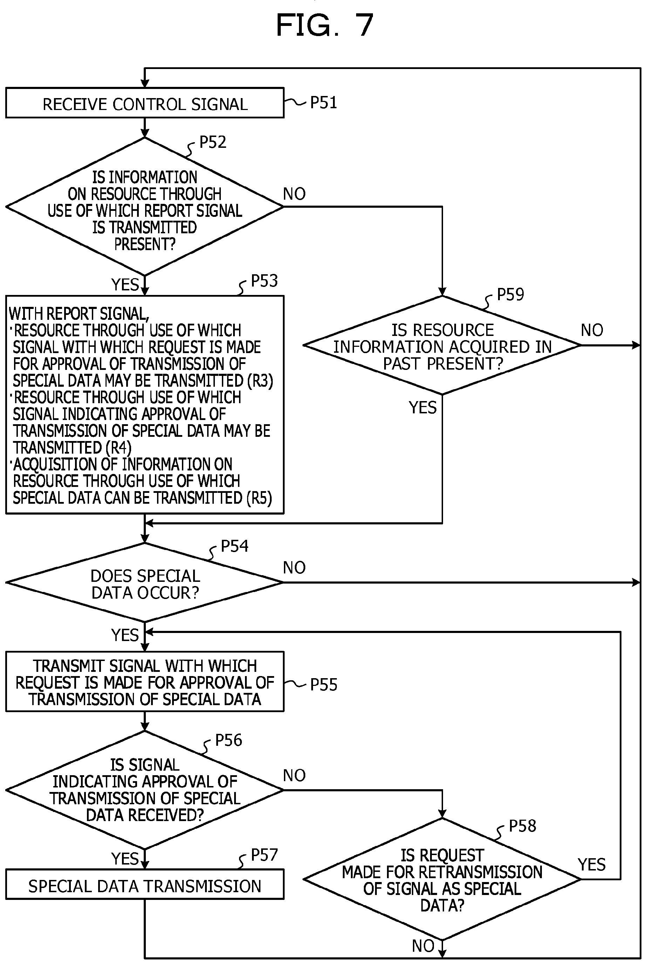

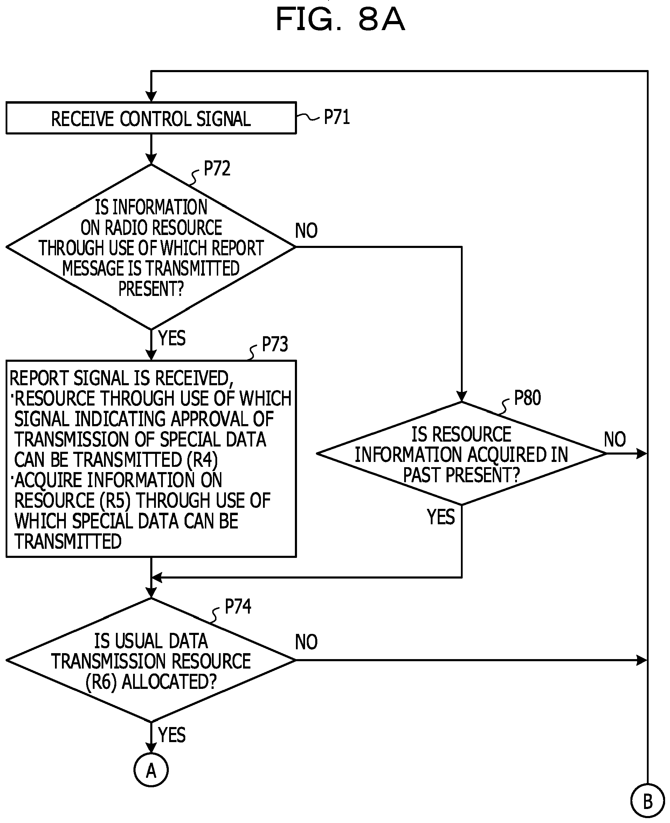

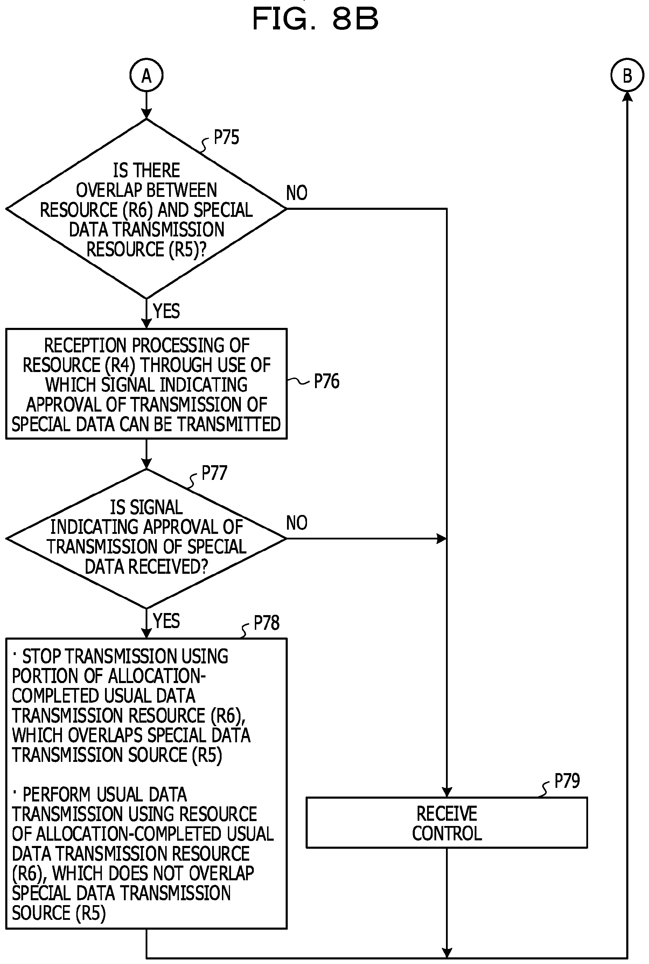

Next, an example of operation with a focus on the terminal 3 in the wireless communication system 1 described above will be described with reference to FIGs. 7 and 8.

FIG. 7 is a flowchart with a focus on the operation of the terminal 3 (for example, the terminal 3-1 in FIG. 5) that performs the transmission of the special data.

On the other hand, FIG. 8 (i.e. FIGs. 8A and 8B) is a flowchart illustrating the example of the operation of the terminal 3 that possibly changes the UL data transmission processing in a case where the transmission of the special data by the terminal 3 that may transmit the special data is approved, which is a terminal 3 that is different from the terminal 3 that may transmit the special data. For example, the terminal 3-2 that illustrated in FIG. 5 may be understood as operating according to the flowchart that is illustrated in FIG. 8.

### (Example of Operation of the Terminal 3-1)

As illustrated in FIG. 7, when the control signal that is transmitted by the base station 2 is received, using, for example, the control signal resource R1 (Processing P51), the terminal 3-1 may determine whether or not the information on the report signal resource R2, through the user of which the report signal is transmitted, is set to be in the control signal (Processing P52).

If the information on the report signal resource R2 is set (YES in Processing P52), the terminal 3-1 receives the report signal using the report signal resource R2 that is indicated by the information on the report signal resource R2.

As described above, pieces of information relating to the special data transmission approval request resource R3, the special data transmission approval resource R4, and the special data transmission resource R5 may be set to be in the report signal. The terminal 3-1 receives the report signal, and thus acquires the pieces of information on the resources R3 to R5 (Processing P53).

Thereafter, the terminal 3-1 monitors whether or not the special data that is to be transmitted to a destination which is the base station 2 (Processing P54). In a case where the special data occurs (YES), the terminal 3-1 may transmit the signal with which a request for the approval of the transmission of the special data is made to a destination that is the base station 2, using the special data transmission approval request resource R3 (Processing P55).

When the signal which a request is made for the approval of the transmission of the special data is transmitted, the terminal 3-1 may perform the reception processing using the special data transmission approval resource R4, and may monitor whether or not the signal that indicates the transmission approval is received (Processing P56).

If the signal that indicates the approval of the transmission of the special data is received (YES in Processing P56), the terminal 3-1 may transmit the special data to a destination that is the base station 2 using the special data transmission resource R5 (Processing P57).

Although a certain amount of time has elapsed, the signal that indicates the approval of the transmission of the special data is not received (NO in Processing P56), the terminal 3-1 may determine whether or not it is desirable for the special data that was going to be transmitted to be again transmitted as the special data (Processing P58).

If a result of the determination is a positive determination (YES in Processing P58), the terminal 3-1 may proceed to Processing P55 and may retransmit the signal with which a request is made for the approval of the transmission of the special data, using the special data transmission approval request resource R3.

On the other hand, in a case where it is not desirable for the special data that was going to be transmitted to be now transmitted as the special data (NO in Processing P58z), the terminal 3-1 may stop the transmission of the data. Thereafter, the terminal 3-1 may return to Processing P51, and may monitor whether or the control signal is received and whether or not any other special data occurs.

In Processing P52, if the pieces of information on the resources R3 to R5 are not set to be in the report signal (NO), the terminal 3-1 may check whether or not resource information that was acquired in the past is present (Processing P59).

If the resource information that was acquired in the past is present (YES in Processing P59), the terminal 3-1 may perform Processing P54 onwards. If the resource information that was acquired in the past is absent (NO in Processing P59), the terminal 3-1 may return to Processing P51.

### (Example of Operation of the Terminal 3-2)

Next, an example of operation of the terminal 3-2 that possibly changes the UL data transmission processing in a case where the transmission of the special data by the terminal 3-1 described above is approved will be described with reference to FIG. 8.

As illustrated in FIG. 8, when the control signal that is transmitted by the base station 2 is received, using, for example, the control signal resource R1 (Processing P71), the terminal 3-2 may determine whether or not the information on the report signal resource R2 is set to be in the control signal (Processing P72).

If the information on the report signal resource R2 is set (YES in Processing P72), the terminal 3-2 receives the report signal using the report signal resource R2 that is indicated by the information.

The pieces of information relating to the special data transmission approval resource R4, and the special data transmission resource R5 may be set to be in the report signal. The terminal 3-2 receives the report signal, and thus acquires pieces of information on the resources R4 to R5 (Processing P73).

The information on the special data transmission approval request resource R3 may be set to be in the report signal that is received by the terminal 3-2. For example, in the same manner as the terminal 3-1, the terminal 3-2 may be a terminal that may transmit the special data.

The terminal 3-2 determines whether or not the usual data transmission resource R6 for the UL (for example, refer to FIGs. 2 to 4) is allocated with the control signal in the usual resource allocation procedure (Processing P74).

If, as a result of the determination, the usual data transmission resource R6 for the UL is allocated (YES in Processing P74), based on the information that is acquired in Processing P73, the terminal 3-2 may determine whether or not the resource R6 overlaps the special data transmission resource R5 (Processing P75).

In a case where it is determined that there is no overlap (NO in Processing P75), the terminal 3-2 may perform the data transmission to a destination that is the base station 2, using the usual data transmission resource R6 that is allocated in the usual resource allocation procedure (Processing P79).

On the other hand, in a case where it is determined that there is overlap between the usual data transmission resource R6 and the special data transmission resource R5 (YES in Processing P75), the terminal 3-2 may perform the reception processing of the special data transmission approval resource R4 (Processing P76).

Because the information on the special data transmission approval resource R4 is reported to the terminals 3-1 and 3-2, both the terminals 3-1 and 2-3 may perform the reception processing of the special data transmission approval resource R4.

With the reception processing of the special data transmission approval resource R4, the terminal 3-2 may determine whether or not the signal that indicates the approval of the transmission of the special data is transmitted to a destination that is any other terminal 3-1 (Processing P77).

For example, with the reception processing of the special data transmission approval resource R4, the terminal 3-2 may reliably detect whether or not the portion of the usual data transmission resource R6, which overlaps the special data transmission resource R5, is used for the transmission of the special data.

In a case where it is determined that the signal which indicates the approval of the transmission of the special data is transmitted (YES in Processing P77), the terminal 3-2 does not perform the UL data transmission that uses the usual data transmission resource R6 which is allocated in the usual resource allocation procedure (Processing P78). For example, the terminal 3-2 may stop UL transmission processing that uses the usual data transmission resource R6.

If there is a resource of the usual data transmission resource R6 that is allocated in the usual resource allocation procedure, which does not overlap the special data transmission resource R5, the terminal 3-2 may perform the UL data transmission using the resource (Processing P78).

As illustrated in FIGs. 4(A) and 4(C), in some cases, the entire usual data transmission resource R6 that is allocated to the terminal 3-2 is included in the same resource R5 as the special data transmission resource R5.

In this case, because the resource that does not overlap the special data transmission resource R5 is not present, the terminal 3-2 may stop the UL transmission processing that uses the resource R6, without performing the UL data transmission that uses the usual data transmission resource R6.

On the other hand, in a case where it is determined that the signal which indicates the approval of the transmission of the special data is not transmitted (NO in Processing P77), the terminal 3-2 may perform the transmission of the usual data using the usual data transmission resource R6 in the same manner as in a case where there is no overlap between the resources R5 and R6 (Processing P79).

In this case, the terminal 3-2 is allowed to perform the transmission of the usual data using a radio resource that includes a portion of the usual data transmission resource R6, which overlaps the special data transmission resource R5.

In Processing P72, if the information on the report signal resource R2 is not set to be in the received control signal (NO), the terminal 3-2 may check whether or not the resource information that was acquired in the past is present (Processing P80).

If the resource information that was acquired in the past is present (YES in Processing P80), the terminal 3-2 may perform Processing P74 onwards. If the resource information that was acquired in the past is absent (NO in Processing P80), the terminal 3-2 may return to Processing P71.

In Processing P74, even in a case where the usual data transmission resource R6 for the UL is not allocated (NO), the terminal 3-2 may return to Processing P71.

### (Example of a Design of the Signal with Which a Request is Made for the Approval of the Transmission of the Special Data)

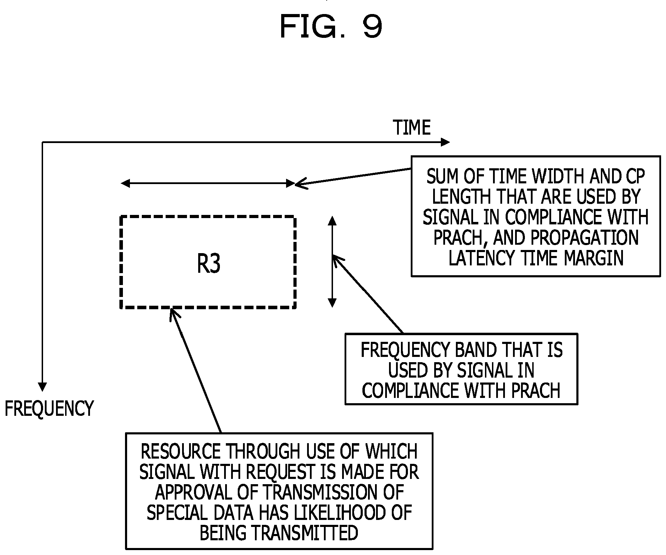

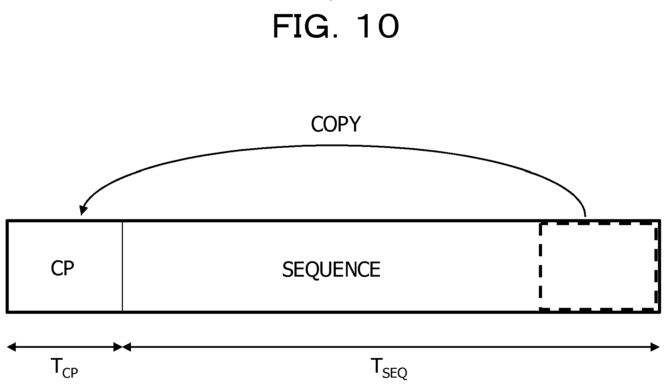

Next, an example of a design of the signal (the interrupt signal) with which a request is made for the approval of the transmission of the special data described above will be described with reference to FIGs. 9 and 10.

For example, a signal that complies with Physical Random Access Channel (PRACH) that is defined in 3GPP TS36.211 may be used for the interrupt signal that is transmitted for the terminal 3 to make a request to the base station 2 for the approval of the transmission of the special data.

For example, any one of Zadoff -Chu sequences (coding sequences) of different time lengths (for example, 133 µs, 800 µs, 1600 µs, and the like) that results from using frequency domains which corresponds to the predefined number of RBs may be used for the signal that is transmitted in order to make a request for the approval of the transmission of the special data.

As illustrated in FIG. 10, a portion of the end of the sequence may be added to the head of the sequence as a cyclic prefix (CP). A CP length is stipulated in 3GPP TS36.211.

To how many RBs the frequency domain that is used corresponds, how long is the Zadoff-Chu sequence that is used, and how long is the CP that is used may be defined with a higher layer signal, and may be notified, as the report information, to the terminal 3. A "higher layer" means a layer that is at a higher level than a physical layer.

If it is assumed that a cell which accommodates the terminal 3 that may transmit the special data is smaller than a macro cell and that the terminal 3 is any monitoring apparatus and does not move at a high speed, a preferable selection may probably be the use of a sequence having a length of 133 µs.

The special data transmission approval request resource R3, as schematically illustrated in FIG. 9, may be stipulated as a frequency domain that corresponds to the number of RBs that are designated and a time domain that results from adding a margin of a radio wave propagation latency time to a length of the interrupt signal that is used.

As a non-limited example, a case is assumed where, in a frequency domain of 1.08 MHz that corresponds to 6 RBs, a Zadoff-Chu sequence of 133 µs is used, where a CP length is 14.6 µs, and where a margin of a propagation latency time of 9.4 us is used.

In this case, in a frequency domain of 1.08 MHz, a domain having a time length of (133 µs + 14.6 µs + 9.4 µs) = 157 µs) may be set for the special data transmission approval request resource R3.

On the other hand, in a case where compliance with radio frame format that is stipulated by 3GPP is not requested, a frequency domain, a length of a sequence, and the like, which are to be used, may be set comparatively freely.

Even in this case, if a Zadoff-Chu sequence that complies with PRACH which is defined in 3GPP TS36.211 is set to be used, in a case where multiple terminals 3 compete for the interrupt signal with which a request is made for the approval of the transmission of the special data and where collision occurs, a system design that has an excellent detection characteristic is also possible.

According to 3GPP TS36.211, the terminal 3 selects one from among 64 sequences and transmits the selected sequence as a PRACH signal. Even in a case where competition and collision between an existing PRACH signal and the interrupt signal according to the present embodiment are problematic, this is possibly dealt with by defining a new root sequence number and thus performing setting in such a manner that competition with an existing sequence does not occur, or by suitably selecting the number of available sequences.

### (Example of the Signal that Indicates the Approval of the Transmission of the Special Data)

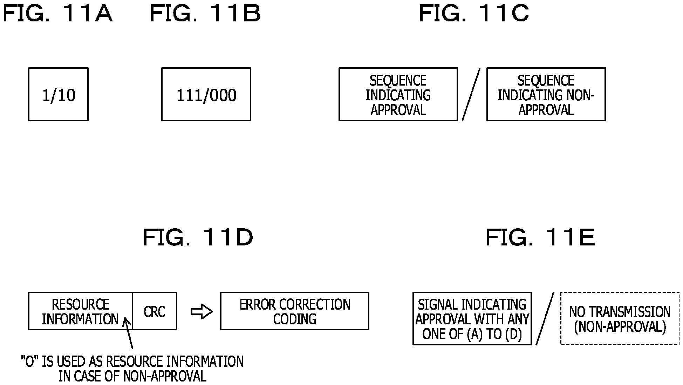

Next, several examples of the signal that indicates the approval of the transmission of the special data will be described with reference with FIGs. 11(A) to 11(E).

FIG. 11(A) illustrates an example of a signal in which the approval and the non-approval of the transmission of the special data are expressed as 1 (approval) are 0 (non-approval), respectively, which are one bit in length. In this case, because resistance to an error on a communication path is low, coding that is one of various error correction measures may be performed. For example, as illustrated in FIG. 11(B), the approval and the non-approval may be expressed as "111" and "000", respectively, which are 3 bits in length.

In further increasing the resistance to the error on the communication path, as illustrated in FIG. 11(C), two long sequences are further prepared. The "approval" may be expressed with one sequence, and the "non-approval" may be expressed with the other sequence.

The terminal 3 may determine the approval or the non-approval by performing an arithmetic operation of correlation with a sequence that corresponds to an approval or a non-approval. For this reason, it is preferable that there is a negative correlation relationship between two sequences.

"1" and "0" or "111" and "000", which are described above, are examples of codes that have a negative correlation relationship. A setting may be provided in which, in a case where the transmission of the special data is approved, a signal is transmitted and where, in a case where the transmission of the special data is not approved, a signal is not transmitted.

In a case where information on the resource R5, through the user of which the special data is transmitted, is included in the signal that indicates the approval of the transmission of the special data, one choice is also to perform advanced error correction coding processing.

For example, as schematically illustrated in FIG. 11(D), the base station 2 on the reception side may add a CRC code for setting a decoding error to be determinable, to the information on the resource R5 that is included in the signal which indicates the approval of the transmission of the special data, may perform error correction coding of an entire signal, and may transmit the resulting signal.

In the terminal 3 on the reception side, an error correction code of the received signal is decoded. In a case where the information on the resource R5 is obtained using the CRC code without a decoding error, it may be determined that the transmission of the special data is approved by the base station 2 in the resource R5.

In a case where the transmission of the special data is "non-approved", for example, the base station 2 may set address information indicating "0" as the information on the information on the resource R5. If the address indicating "0" as the information on the resource R5 is received, the terminal 3 may determine that the transmission of the special data is "non-approved".

If a setting is such that "in a case where the signal that the terminal 3 receives using the resource R4 is difficult to correctly decode, the terminal 3 operates with the transmission of the special data being non-approved" is provided, in a case where the transmission of the special data is non-approved, the base station 2 may be set not to transmit a signal using the resource R4. By not transmitting the signal, the terminal 3 may be implicitly notified that the transmission of the special data is "non-approved".

For example, as schematically illustrated in FIG. 11(E), the base station 2 may notify the terminal 3 of the "approval" using any one of information techniques that are illustrated in FIGs. 11(A) to 11(D), and, in the case of the non-approval", may implicitly notify the terminal 3 that the transmission of the special data is "non-approved", by not transmitting the signal.

### (Example of a Design of the Report Signal)

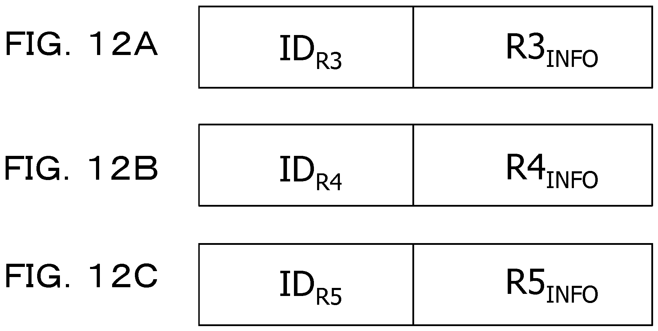

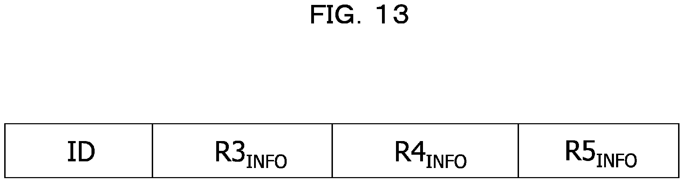

Next, an example of a design of the report signal described above will be described with reference to FIGs. 12 and 13. In order to realize the example of the operation, which is described above, the base station 2 notifies, in advance, one or more terminals 3, which is positioned in the wireless area 200, of the pieces of information on the special data transmission approval request resource R3, the special data transmission approval resource R4, and the special data transmission resource R5, using, for example, the report signal.

The pieces of information relating to the resources R3 to R5, as illustrated in FIG. 12(A) to 12(C), may be set to be in individual report signals, respectively, and, as illustrated in FIG. 13, may be set to be in one common report signal.

A report signal that is illustrated in FIG. 12(A) includes an identifier ID_{R3} indicating that the report signal is a report signal including information R3INFO relating to the resource R3, and information R3INFO relating to the resource R3.

A report signal that is illustrated in FIG. 12(B) includes an identifier ID_{R4} indicating that the report signal is a report signal including information R4_{INFO} relating to the resource R4, and information R4_{INFO} relating to the resource R4.

A report signal that is illustrated in FIG. 12(C) includes an identifier ID_{R5} indicating that the report signal is a report signal including information R5INFO relating to the resource R5, and information R5INFO relating to the resource R5.

On the other hand, a report signal that is illustrated in FIG. 13 includes an identifier ID indicating that the report signal is information relating to the transmission of the special data, and the pieces of information R3_{INFO} to R5INFO relating to the resources R3 to R5, respectively.

The base station 2 notifies the terminal 3 of information relating to the resource R2, through the use of which the report signal as described above is transmitted, with the control signal that is transmitted using the control signal resource R1 (for example, Processing P32 in FIG. 6).

The terminal 3 receives the control signal using the control signal resource R1, and thus acquires the information relating to the resource R2, through the use of which the report signal is transmitted. Furthermore, the terminal 3 performs the reception processing of the resource R2 and thus acquires the report signal.

With an identifier that is attached to the report signal, the terminal 3 identifies which information is included in a signal that is the report signal. The identifier may be set to be in an identifier that is different from an identifier of any other information. For example, a sequence that is different from a sequence that is used as an identifier of any other information may be used for the identifier described above.

In some cases, for information on a resource which is included in the report signal that is illustrated in FIG. 13, one or several of the pieces of information on resources R3 to R5 are sufficient. For example, as described above, in some cases, an association is set to be between each of the resources R3 to R5.

Instead of the report signal, one or several of the pieces of information on the resources R3 to R5 that are associated with the transmission of the special data may be notified to the terminals 3 with individual signals for the terminals 3, respectively.

For example, flag information indicating whether or not the resource R5 that has a likelihood of being used for the transmission of the special data is included in the resource R6 may be added to allocation information on the resource R6 that is individually transmitted to a destination which is the terminal 3, in the usual resource allocation procedure.

For example, the base station 2 may notify the terminal 3 of the flag information indicating that a portion which overlaps the special data transmission resource R5 is included in the resource R6, in a procedure for allocating the resource R6 to the terminal 3.

With the flag information, the terminal 3 may identify whether or not the resource R5 that has a likelihood of being used for the transmission of the special data is included in the resource R6 that is allocated in the usual resource allocation procedure.

The pieces of information (hereinafter referred to "resource information" for convenience) on the resources (R3 to R5) may be expressed as sequence numbers that are distinguished in the time domain and the frequency domain, and may be displayed as bitmaps for resource numbers.

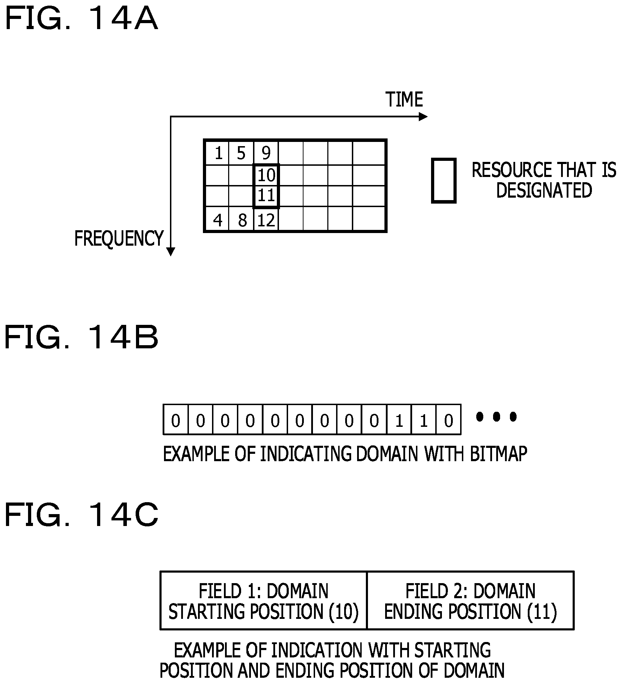

For example, as illustrated in FIG. 14(A), a serial number may be assigned to each of the resources that are distinguished in the time domain and the frequency domain. The serial number is an example of an identifier that identifies a resource in the time domain and the frequency domain.

The resource information may be expressed with a serial number of a resource, and, as illustrated in FIG. 14(B), may be expressed as a bitmap that corresponds to a serial number.

For example, in a case where, with serial numbers, two resources "10" and "11" are set for any one of the resources R3 to R5, as illustrated in FIG. 14(B), resource information may be expressed with a bitmap in which two bits, the tenth bit and the eleventh bit, are set to "1".

Alternatively, as illustrated in FIG. 14(C), the resource information may be information that results from expressing a starting position and an ending position for a resource with serial numbers.

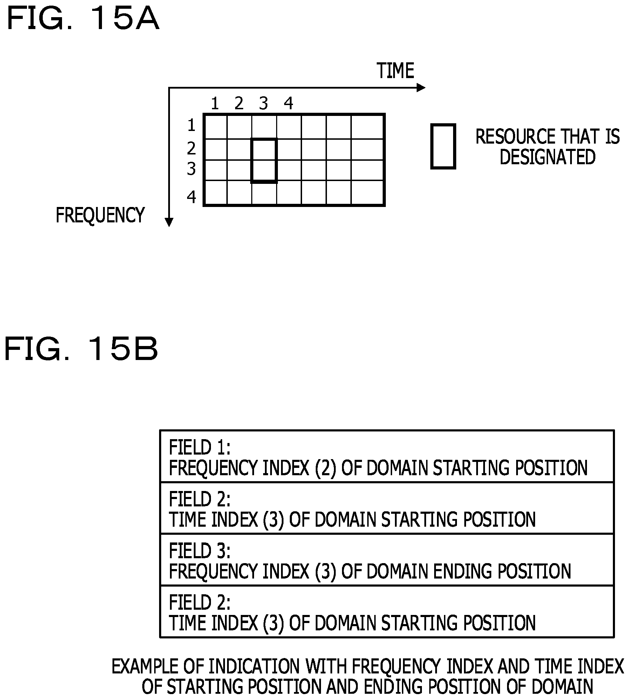

In a case where, as illustrated in FIG. 15(A), a resource is identified with an index of each of a frequency and time, as illustrated in FIG. 15(B), resource information may be information that results from displaying the starting position and the ending position for the resource in a state of being combined with the indexes of the frequency and the time.

### (First Modification Example)

In a case where two or more terminals 3 that may obtain the special data are present in the wireless area 200, multiple resources R3, multiple resources R4, and multiple resources R5 may be set with the resources R3 to R5 being associated with the transmission of the special data.

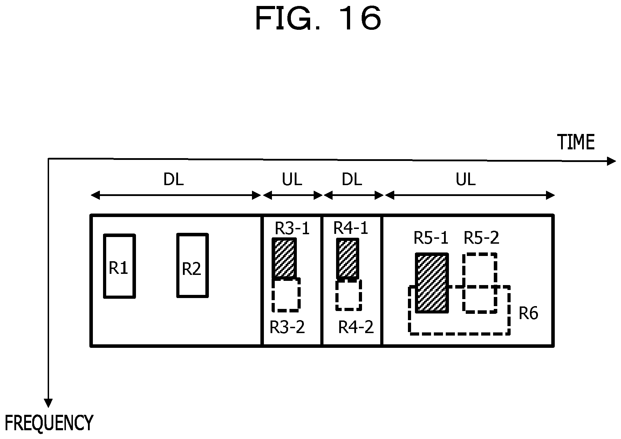

For example, as schematically illustrated in FIG. 16, in the radio frame, two special data transmission approval request resources R3, two special data transmission approval resources R4, and special data transmission resources R5 may be set. In an example in FIG. 16, two resources R3 are distinguished as a resource R3-1 and a resource R3-2. This is also the same for the resource R4 and R5.

However, all of, or one or several of, the special data transmission approval request resource R3, the special data transmission approval resource R4, and the special data transmission resource R5 may be set for every terminal 3 that may transmit the special data.

Which resource is used by an individual terminal 3, for example, may be in advance determined with a hardware setting of the individual terminal 3. Furthermore, the base station 2 may provide instruction to the terminal 3 as to which resource is used by the individual terminal 3.

A "higher layer signal" is different from a physical layer control signal that is transferred using a specific resource in a physical radio frame. However, it is also possible that the "higher layer signal" is understood as a "control signal" in a broad sense in terms of controlling which resource is used by an individual terminal 3 to perform communication in a radio frame.

Without determining which resource is used by the terminal 3, the terminal 3 that is going to perform the transmission of the special data selects one resource from multiple resources and transmits a signal relating to the transmission of the special data using the selected resource. The selection of the resource may be made according to any rule, and may be randomly performed using a random number or like.

According to the above description, competition and therefore collision among multiple signals relating to the transmission of the special data, which are transmitted from multiple different terminals 3, may be avoided, or the probability that the competition and the collision will occur may be reduced.

A communication operation in a radio frame configuration that is illustrated in FIG. 16 will be described below. In FIG. 16, it is assumed that a setting is provided in which a special data transmission approval resource R4-1 and a special data transmission resource R5-1 correspond to a special data transmission approval request resource R3-1. It is assumed a setting is provided in which a special data transmission approval resource R4-2 and a special data transmission resource R5-2 corresponds to a special data transmission approval request resource R3-2.

The terminal 3 that is going to transmit the special data may transmit a signal with which a request for the approval of the transmission of the special data is made to a destination that is the base station 2, using the resource R3-1 or R3-2 that is set in advance, is indicated with a higher layer, or is randomly selected.

In a case where the transmission of the special data by the terminal 3 is approved, the base station 2 may transmit the signal that indicates the approval of the transmission of the special data, to a determination of the terminal 3, using the resource R4-1 or R4-2 that corresponds to the resource R3-1 or R3-2, respectively, through the use of which the signal with which a request is made for the approval of the transmission of the special data is received.

The terminal 3 that transmits the signal with which a request is made for the approval of the transmission of the special data receives the signal that indicates the approval of the transmission of the special data, using the resource R4-1 to R4-2 that correspond to the resource R3-1 or R3-2, respectively, through the user of which the signal is received.

The terminal 3 that received the signal which indicates the approval of the transmission of the special data may perform the transmission of the special data to a destination that is the base station 2, using the resource R5-1 or R5-2 the corresponds to the resource R4-1 to R4-2, respectively, through the use of which the signal is received.

Any other terminal 3 determines whether or not the usual data transmission resource R6 that is allocated by the base station 2 in the usual resource allocation procedure overlaps one of, or both of, the special data transmission resource R5-1 and R5-2.

In a case where it is determined that the overlap occurs any other terminal 3 may check whether or not the signal that indicates the approval of the transmission of the special data is transmitted using the resource R4-1 and/or R4-2 that corresponds to the resource R5-1 and/or R5-2, respectively, which overlaps the resource R6.

If the signal that indicates the approval of the transmission of the special data is transmitted, any other terminal 3 does not perform UL transmission that uses the resource R6 which overlaps the resource R5-1 and/or R5-2 that corresponds to the resource R4-1 and/or R4-2, respectively.

If a resource that does not overlap the resource R5-1 and/or R5-2 of the allocated resource R6, which corresponds to the resource R4-1 and/or R4-2, respectively, is present, any other terminal 3 may perform the UL transmission using the resource.

### (Second Modification Example)

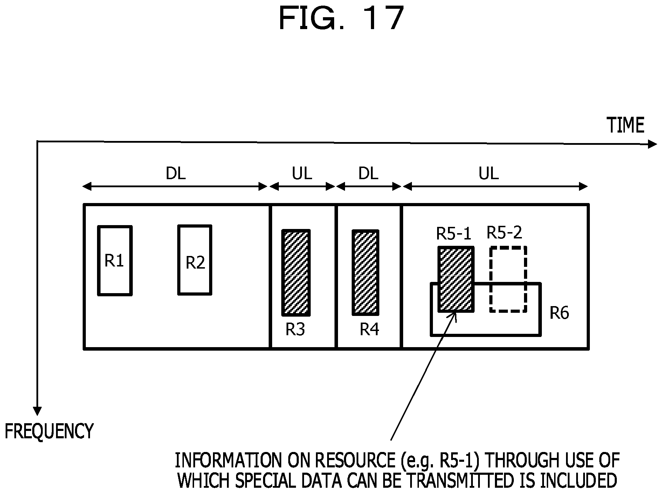

In an example in FIG. 16, multiple resources R3, multiple resources R4, and multiple resources R5 are set in the radio frame, but, for example, as schematically illustrated in FIG. 17, only multiple resources R5 may be limitedly set whereas one resource R3 and one single resource R4 are set.

For example, only one the special data transmission approval request resource R3 and only one the special data transmission approval resource R4 may be set in the radio frame in the same manner as in an example in FIG. 2, and multiple special data transmission approval request resources R5 may be set in the same manner as in the example in FIG. 16.

In an example in FIG. 17, in a case where the base station 2 approves the transmission of the special data, the base station 2 may transmit information relating to one (for example, R5-1) of the multiple special data transmission resources, that is, the special data transmission resource R5-1 and the special data transmission resource R5-2, along with a signal that is transmitted using the special data transmission approval resource R4.

Based on the information relating to the resource R5-1 that is notified along with the approval of the transmission, the terminal 3 that transmits the terminal 3 may transmit the special data to a destination that is the base station 2, using the resource R5-1. Any other terminal 3 performs the reception processing of the signal that is transmitted using the resource R4, and thus may recognize that the transmission of the special data is approved, using the resource R5-1.

Therefore, any other terminal 3 does not perform transmission using a resource of the usual data transmission resource R6 that is allocated by the base station 2 in the usual resource allocation procedure, which overlaps the resource R5-1.

If a resource of the resource R6, which does not overlap the resource R5-1, is present, any other terminal 3 may perform the UL transmission using a resource that does not overlap the resource R5-1.

In the example described above, in a case where signals that make requests for the approval of the transmission of the special data, which are transmitted at the same time from multiple terminals 3, is detectable, the base station 2 may designate a different special data transmission resource R5 in response to each of the requests and may approve the transmission of the special data.

Each of the modification examples that are described with reference to FIGs. 16 and 17 assumes a TDD-based frame configuration that is based on TDD in the same manner as in the example in FIG. 2, but although a radio frame configuration that is based on FDD which is illustrated in FIG. 3 is assumed, the same operation is possible.

### (Example of a Configuration of the Base Station 2)

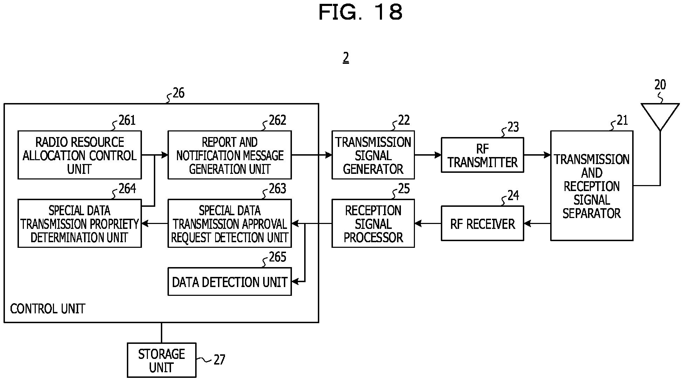

Next, an example of a configuration of the base station 2 according to the embodiment described above will be described with reference to FIG. 18. The base station 2 that is illustrated in FIG. 18 may illustratively include an antenna 20, a transmission and reception signal separator 21, a transmission signal generator 22, a wireless (RF) transmitter 23, a wireless (RF) receiver 24, a reception signal processor 25, a control unit 26, and a storage unit 27.

The antenna 20 transmits a DL wireless signal to a destination that is the terminal 3, and receives a UL wireless signal that is transmitted by the terminal 3.

The transmission and reception signal separator 21 outputs a transmission wireless signal, which is input from the RF transmitter 23, to the antenna 20 and outputs a reception wireless signal, which is input from the antenna 20, to the RF receiver 24. The transmission and reception signal separator 21 may be referred to as "separator 21".

With the separator 21, the antenna 20 may be shared between the RF transmitter 23 and the RF receiver 24. However, instead of using the separator 21, with the RF transmitter 23 and the RF receiver 24, an individual antenna 20 may be included in the base station 2.

The transmission signal generator 22 illustratively generates a DL transmission signal (illustratively, a baseband signal) from information that is generated in the control unit 26. The report signal that is reported to a destination that is the terminal 3, and a notification signal that is notified to the terminal 3 may be included in a transmission signal that is generated by the transmission signal generator 22.

The RF transmitter 23 illustratively converts the transmission signal, which is generated in the transmission signal generator 22, into a wireless signal (this conversion may be referred to as "up-conversion") and thus outputs the resulting wireless signal to the separator 21. The transmission wireless signal may be amplified to a given transmission power, using, for example, a high-power amplifier (HPA) in the RF transmitter 23.

The RF receiver 24 illustratively converts the reception wireless signal, which is input from the separator 21, into, for example, a baseband signal (this conversion may be referred to as "down-conversion") and outputs the resulting baseband signal to the reception signal processor 25.

The reception wireless signal may be amplified, using, for example, a low-noise amplifier (LNA) in the RF receiver 24. The signal with which a request for the approval of the transmission of the special data is made by the terminal 3 to the base station 2, or the special data that is actually transmitted by the terminal 3 which receives the approval of the transmission of the special data may be included in the reception wireless signal.

The control unit 26 illustratively controls allocation of a resource to the terminal 3. Settings of the resources (R3 to R5) associated with the transmission of the special data may be included in the resource allocation control. The control unit 26 may perform signal processing relating to the usual data and signal processing relating to the special data.

Detection of the signal with which a request is made for the approval of the transmission of the special data, generation of the signal that indicates the approval of the transmission of the special data, or detection of the special data may be illustratively included in the signal processing relating to the special data.

For this reason, the control unit 26 may illustratively include a radio resource allocation control unit 261, a report and notification message generation unit 262, a special data transmission approval request detection unit 263, a special data transmission propriety determination unit 264, and a data detection unit 265.

The radio resource allocation control unit 261 may be referred to as "scheduler 261". The scheduler 261 is an example of a setting unit, and it is possible that the resources R1 to R6 described above are set to be in a radio frame format in the wireless area 200.

For example, the scheduler 261 may set the control signal resource R1 and the report signal resource R2 in the DL resource that is available for the DL communication of the radio frame. The scheduler 261 may set the special data transmission approval request resource R3 and the special data transmission resource R5 in the UL resource that is available for the UL communication of the radio frame. The scheduler 261 may set the special data transmission approval resource R4 in the DL resource that is available for the DL communication of the radio frame.

The report and notification message generation unit 262 illustratively generates a message for reporting or notifying the pieces of information on the resources R3 to R5 that are set, to the terminal 3. The generated message may be input into the transmission signal generator 22.

In a case where the signal with which a request is made for the approval of the transmission of the special data is detected and thus the transmission of the special data is approved, the report and notification message generation unit 262 may generate a message indicating the approval of the transmission of the special data.

The detection of the approval of the transmission of the special data may be illustrated made by the special data transmission approval request detection unit 263. Whether or not the transmission of the special data is approved may be illustratively determined by a special data transmission propriety determination unit 264.

For example, the special data transmission approval request detection unit 263 may detect the signal with which a request is made for the approval of the transmission of the special data in a reception signal that is input from the reception signal processor 25. A result of the detection may be output to the special data transmission propriety determination unit 264.

When the signal with which a request is made for the approval of the transmission of the special data is detected with the special data transmission approval request detection unit 263, the special data transmission propriety determination unit 264 may determine whether or not the transmission of the special data is approved in response to the request. In a case where a result of the determination is the "approval", a message indicating the approval of the transmission of the special data is generated by the report and notification message generation unit 262.

The data detection unit 265 illustratively detects the usual data or the special data that is transmitted by the terminal 3, in the reception signal that is input from the reception signal processor 25.

The data detection unit 265 may be understood as being an example of a reception unit along with the reception signal processor 25. The reception unit receives the special data that the terminal 3-2 transmits using the transmission resource R5.

The reception unit may not perform the reception processing of the usual data in a portion of the usual data transmission resource R6 that is allocated to the terminal 3-1, which overlaps the special data transmission resource R5. The reception unit may perform the reception processing of the usual data that the terminal 3-1 transmits using the radio resource that is different from the overlapping portion.

Information or data that is used for processing by each of the units 261 to 265 described above, and information or data that is generated by each of the units 261 to 265 may be stored in the storage unit 27.

For example, the pieces of information on the resources R3 to R5 that are set in the radio frame, or an identifier and the like that is set for the report signal which is illustrated in FIG. 12 or 13 may be stored in the storage unit 27.

Along with any other function as the base station 2 that is not illustrated in FIG. 18, the control unit 26 may be realized with processing by a processor.

For example, a processor, such as a CPU, a DSP, or an MPU, that has an arithmetic operation function may read a program (which may be referred to as a software or an application) or data that is stored in the storage unit 27, for operation, and thus the control unit 26 may be realized.

The "CPU" is short for "central processing unit", the "DSP" is short for "digital signal processor" and the "MPU" is short for "micro processing unit". A processor that has an arithmetic operation capacity may be referred to as "processor device", "processor circuit", or "computer".

As the storage unit 27, one or more of a Random Access Memory (RAM), a Read Only Memory (ROM), a Hard Disk Drive (HDD), a Solid State Drive (SSD), and the like may be used.

A program (which may be referred to as "base station control program" for convince) that possibly realizes all of, or one or several of, various functions as the control unit 26 which is illustrated in FIG. 18 may be included in the storage unit 27. All of, or one or several of, program codes that constitute the base station control program may be described as a portion of an operating system (OS).

The processor such as the CPU reads the base station control program that is stored in the storage unit 27 and executes the base station control program, and thus various functions as the control unit 26 of the base station 2 are realized.

The program or the data that is stored in the storage unit 27 may be provided in the form in which the program or the data is recorded on a computer-readable recoding medium. Examples of the recording medium include a flexible disk, a CD-ROM, a CD-R, a CD-RW, a MO, a DVD, a Blu-ray Disc, a portable hard disk, a Universal Serial Bus (USB) memory, and the like.

The program or the data that is stored in the storage unit 27 may be provided (for example, is downloaded) from a server via a communication line.

### (Example of a Configuration of the Terminal 3)

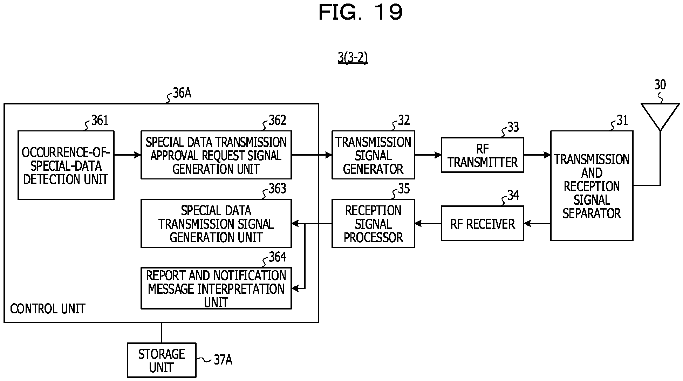

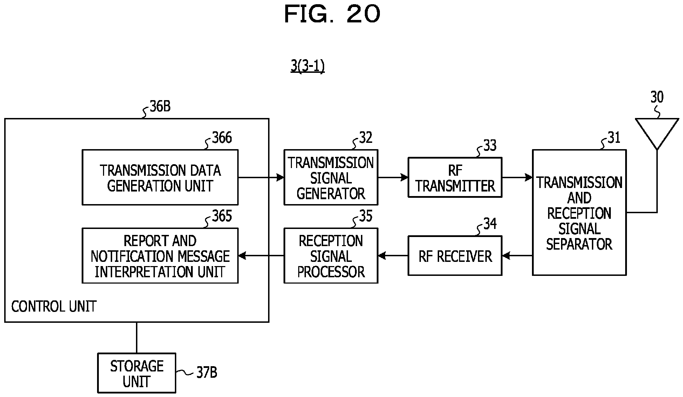

Next, an example of a configuration of the terminal 3 according to the embodiment described above will be described with reference to FIGs. 19 and 20. FIG. 19 is a block diagram illustrating the example of the configuration of the terminal 3 which transmits the special data. The terminal 3-2 that is illustrated in FIG. 5, for example, the terminal 3-2 that possibly executes the flowchart which is illustrated in FIG. 7 may employ a configuration that is illustrated in FIG. 19.

On the other hand, FIG. 20 is a block diagram illustrating the example of the configuration of the terminal 3 that possibly changes the UL data transmission processing in a case where the transmission of the special data by the terminal 3 that transmits the special data is approved. The terminal 3-1 that is illustrated in FIG. 5, for example, the terminal 3-2 that possibly executes the flowchart which is illustrated in FIG. 8 may employ a configuration that is illustrated in FIG. 20.

However, the terminal 3 may include configurations that are illustrated in FIGs. 19 and 20, in a composited manner. For example, the terminal 3 may be a terminal that may transmit the special data and may be a terminal that possible changes the UL transmission processing in a case where the transmission of the special data by any other terminal 3 is approved.

The configuration that is illustrated in FIG. 19 will be described below as a configuration of the terminal 3-2, and the configuration that is illustrated in FIG. 20 will be described below as a configuration of the terminal 3-1.

### (Example of a Configuration of the Terminal 3-2)

As illustrated in FIG. 19, the terminal 3-2 may include an antenna 30, a transmission and reception signal separator 31, a transmission signal generator 32, a RF transmitter 33, a RF receiver 34, a reception signal processor 35, a control unit 36A, and a storage unit 37A.

The antenna 30 transmits a UL wireless signal to a destination that is the base station 2, and receives a DL wireless signal that is transmitted by the base station 2.

The separator 31 outputs a transmission wireless signal, which is input from the RF transmitter 33, to the antenna 30, and outputs a reception wireless signal, which is input from the antenna 30, to the RF receiver 34.

With the separator 31, the antenna 30 may be shared b between the RF transmitter 33 and the RF receiver 34. However, instead of using the separator 31, with the RF transmitter 33 and the RF receiver 34, an individual antenna 30 may be included in the terminal 3-2.

The transmission signal generator 32 illustratively generates a UL transmission signal (illustratively, a baseband signal) from information that is generated in the control unit 36A. The signal with which a request is made for the approval of the transmission of the special data or the usual data, the special data, and the like may be illustratively included in the transmission signal that is generated by the transmission signal generator 32.

The RF transmitter 33 illustratively converts the transmission signal, which is generated in the transmission signal generator 32, into a wireless signal (this conversion may be referred to as "up-conversion") and thus outputs the resulting wireless signal to the separator 31. The transmission wireless signal may be amplified to a given transmission power, using, for example, a high-power amplifier (HPA) in the RF transmitter 33.

The RF receiver 34 illustratively converts the reception wireless signal, which is input from the separator 31, into, for example, a baseband signal (this conversion may be referred to as "down-conversion") and outputs the resulting baseband signal to the reception signal processor 35.

The reception wireless signal may be amplified, using, for example, a low-noise amplifier (LNA) in the RF receiver 34. The control signal or the report signal, the signal that indicates the approval of the transmission of the special data, and the like, which are transmitted by the base station 2, may be illustratively included in the reception wireless signal.

The control unit 36A illustratively controls DL reception processing and the UL transmission processing. Processing that interprets the control signal or the report signal, which is received from the base station 2, and contents of the report signal may be illustratively included in the DL reception processing.

Signal processing relating to the usual data and signal processing relating to the special data may be illustratively included in the UL transmission processing. Processing that generates the signal; with which a request for the approval of the transmission of the special data is made to the base station 2, or processing that receives the approval of the transmission of the special data from the base station 2 and thus transmits the special data to a destination that is the base station 2 may be illustratively included in the signal processing relating to the special data.

For this reason, the control unit 36A may illustratively include an occurrence-of-special-data detection unit 361, a special data transmission approval request signal generation unit 362, a special data transmission signal generation unit 363, and a report and notification message interpretation unit 364.

The occurrence-of-special-data detection unit 361 illustratively detects occurrence of the special data that is to be transmitted from the terminal 3-2 to a destination which is the base station 2. Whether or not the special data occurs may be illustratively detected by monitoring whether or not the special data is stored in the storage unit 37A. The terminal 3-2 may be configured in such a manner that with occurrence of the special data, an interruption occurs to the control unit 36A, and the interruption may be set in such a manner as to be detected with the occurrence-of-special-data detection unit 361. A result of the detection may be assigned to the special data transmission approval request signal generation unit 362. The special data that occurs may be assigned to the special data transmission signal generation unit 363.

When the occurrence of the special data is detected with the occurrence-of-special-data detection unit 361, the special data transmission approval request signal generation unit 362 may generate the signal with which a request for the approval of the transmission of the special data is made to the base station 2.

The report and notification message interpretation unit 364 may illustratively interpret a report message that is included in the reception signal which is input from the reception signal processor 35 and acquires resource information associated with the transmission of the special data. The acquired resource information, for example, may be stored in the storage unit 37A.

The report and notification message interpretation unit 364 may transmit the signal with which a request is made for the approval of the transmission of the special data, to a destination that is the base station 2, and then may monitor whether or not the signal that indicates the approval of the transmission of the special data is stored. A result of the monitoring may be assigned to the special data transmission signal generation unit 363.

When the reception of the signal that indicates the approval of the transmission of the special data is detected in the report and notification message interpretation unit 364, the special data transmission signal generation unit 363 generates a signal for the special data that is to be transmitted to a destination which is the base station 2.

Information or data that is used for the processing by each of the units 361 to 364 described above, and information or data that is generated in each of the units 361 to 365 may be stored in the storage unit 37A.

For example, the pieces of information on the resources R3 to R5 that are acquired from the report signal or an identifier that is set to be in the report signal which is illustrated in FIG. 12 or 13 may be stored in the storage unit 37A.

It is noted that in the same manner as the control unit 26 of the base station 2, the control unit 36A may be realized with processing by a processor, along with any other function as the terminal 3-2 that is not illustrated in FIG. 19.

For example, a processor, such as a CPU, a DSP, or an MPU, that has an arithmetic operation function may read a program or data that is stored in the storage unit 37A, for operation, and thus the control 36A may be realized. A processor that has an arithmetic operation capacity may be referred to as "processor device", "processor circuit", or "computer".

As the storage unit 37A, one or more of a RAM, a ROM, an HDD, an SSD, and the like may be used. A program (which may be referred to as "terminal control program" for convenience) that possibly realizes all of, or one or several of, various functions as the control unit 36A which is illustrated in FIG. 19 may be included in the storage unit 37A. All of, or one or several of, program codes that constitute the terminal control program may be described as a portion of an operating system (OS).

The processor such as the CPU reads the terminal control program that is stored in the storage unit 37A and executes the terminal station control program, and thus various functions as the control unit 36A of the terminal 3-2 are realized.

The program or the data that is stored in the storage unit 37A may be provided in the form in which the program or the data is recorded on a computer-readable recoding medium. Examples of the recording medium include a flexible disk, a CD-ROM, a CD-R, a CD-RW, a MO, a DVD, a Blu-ray Disc, a portable hard disk, a Universal Serial Bus (USB) memory, and the like.

The program or the data that is stored in the storage unit 37A may be provided (for example, downloaded) from a server or the like via a communication circuit.

### (Example of a Configuration of the Terminal 3-1)

On the other hand, by comparison with an example of a configuration of the terminal 3-2 that is illustrated in FIG. 19, a difference with the terminal 3-1 that is illustrated in FIG. 20 is that the terminal 3-1 includes a control unit 36B and a storage unit 37B.

The control unit 36B illustratively controls the DL reception processing and the UL transmission processing. Processing that interprets the control signal or the report signal, which is received from the base station 2, and contents of the report signal may be illustratively included in the DL reception processing. Processing that detects and interprets the signal which indicates the approval of the transmission of the special data, which is transmitted by the base station 2 to a destination that is any other terminal 3-1, may be included in the interpretation processing.

The signal processing relating to the usual data may be illustratively included in the UL transmission processing. Processing that stops the UL transmission processing which uses the resource R6 that overlaps the special data transmission resource R5, or processing that performs the UL transmission which uses the resource R6 that does not overlap the special data transmission resource R5 may be included in the signal processing relating to the usual data.

For this reason, the control unit 36B may illustratively include a report and notification message interpretation unit 365 and a transmission data generation unit 366.

The report and notification interpretation unit 365 illustratively interprets the report message that is included in the reception signal which is input from the reception signal processor 35 and acquires resource information associated with the transmission of the special data. The acquired resource information may be stored in the storage unit 37B.

The report and notification message interpretation unit 365 may illustratively interpret the control message that is received from the base station 2, and may determine the presence or absence of the usual data transmission resource R6 that is allocated to a destination that is the terminal 3-1.

In a case where the resource R6 is allocated, based on the resource information that is acquired from the report message, the report and notification message interpretation unit 365 may further determine whether or not all portions of, or one or several portions, of the resource R6 that is allocated overlap the special data transmission resource R5.

In a case where the reception of the signal that indicates the approval of the transmission of the special data is not detected in the report and notification message interpretation unit 365, the transmission data generation unit 366 may illustratively generate a signal with which the usual data is transmitted using the resource R6 that is allocated to the terminal 3-1 to which the transmission data generation unit 366 belongs.

In a case where the reception of the signal that indicates the approval of the transmission of the special data is detected in the report and notification message interpretation unit 365, the transmission data generation unit 366 does not perform the UL transmission using a resource of the resource R6 that is allocated to the terminal 3-1 to which the transmission data generation unit 366 belongs, which overlaps the special data transmission resource R5.

If a resource of the resource that is allocated to the terminal 3-1 to which the transmission data generation unit 366 belongs, which does not overlap the special data transmission resource R5, is present, the transmission data generation unit 366 may generate the signal with which the usual data is transmitted using the resource that does not overlap the special data transmission resource R5.

The transmission data generation unit 366 and the transmission signal generator 23 may be understood as being an example of the transmission unit. The transmission unit transmits the usual data signal to a destination that is the base station 2, using the usual data transmission resource R6 that is allocated from the base station 2 in the wireless area 200.

The fact that the UL transmission is not performed using the resource of the resource R6, which overlaps the resource R5, may be understood as being equivalent to the fact that the control unit 36B controls the transmission unit in such a manner that the transmission of the usual data that uses the portion of the resource R6, which overlaps the resource R5, is not performed.

The fact that the signal with which the usual data is transmitted is generated in a case where the approval of the transmission of the special data is not detected may be understood as being equivalent to the fact that the control unit 36B controls the transmission unit in such a manner that the transmission of the usual data is performed, using a resource that includes overlapping portions of the resources R6 and R5.

In the same manner as the control unit 36A of the terminal 3-2, the control unit 36B may be realized with processing by a processor, along with any other function as the terminal 3-1 that is not illustrated in FIG. 20.

For example, a processor, such as a CPU, a DSP, or an MPU, that has an arithmetic operation function may read a program or data that is stored in the storage unit 37B, for operation, and thus the control unit 36B may be realized.

A processor that has an arithmetic operation capacity may be referred to as "processor device", "processor circuit", or "computer".

As the storage unit 37B, one or more of a RAM, a ROM, an HDD, an SSD, and the like may be used. A program (which may be referred to as "terminal control program" for convenience) that possibly realizes all of, or one or several of, various functions as the control unit 36B which is illustrated in FIG. 20 may be included in the storage unit 37B. All of, or one or several of, program codes that constitute the terminal control program may be described as a portion of an operating system (OS).

The processor such as the CPU reads the terminal control program that is stored in the storage unit 37B and executes the terminal station control program, and thus various functions as the control unit 36B of the terminal 3-1 are realized.

The program or the data that is stored in the storage unit 37B may be provided in the form in which the program or the data is recorded on a computer-readable recording medium. Examples of the recording medium include a flexible disk, a CD-ROM, a CD-R, a CD-RW, a MO, a DVD, a Blu-ray Disc, a portable hard disk, a USB memory, and the like.

The program or the data that is stored in the storage unit 37B may be provided (for example, downloaded) from a server or the like via a communication circuit.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

### REFERENCE SIGNS LIST

1 WIRELESS COMMUNICATION SYSTEM
2 BASE STATION
20 ANTENNA
21 TRANSMISSION AND RECEPTION SIGNAL SEPARATOR
22 TRANSMISSION SIGNAL GENERATOR
23 WIRELESS (RF) TRANSMITTER
24 RF RECEIVER
25 RECEPTION SIGNAL PROCESSOR
26 CONTROL UNIT
261 RADIO RESOURCE ALLOCATION CONTROL UNIT
262 REPORT AND NOTIFICATION MESSAGE GENERATION UNIT
263 SPECIAL DATA TRANSMISSION APPROVAL REQUEST DETECTION UNIT
264 SPECIAL DATA TRANSMISSION PROPRIETY DETERMINATION UNIT
265 DATA DETECTION UNIT
27 STORAGE UNIT
3, 3-1, 3-2 TERMINAL
30 ANTENNA
31 TRANSMISSION AND RECEPTION SIGNAL SEPARATOR
32 TRANSMISSION SIGNAL GENERATOR
33 RF TRANSMITTER
34 RF RECEIVER
35 RECEPTION SIGNAL PROCESSOR
36A, 36B CONTROL UNIT
361 AMOUNT-OF-SPECIAL-DATA DETECTION UNIT
362 SPECIAL DATA TRANSMISSION APPROVAL REQUEST SIGNAL GENERATION UNIT
363 SPECIAL DATA TRANSMISSION SIGNAL GENERATION UNIT
364, 365 REPOROT AND NOTIFICATION MESSAGE INTERPRETATION UNIT
366 TRANSMISSION DATA GENERATION UNIT
37A, 37B STORAGE UNIT
4 CORE NETWORK
41 MME
42 PGW
43 SGE
R1 RADIO RESOURCE (CONTROL SIGNAL RESOURCE)
R2 RADIO RESOURCE (REPORT SIGNAL RESOURCE)
R3 RADIO RESOURCE (SPECIAL DATA TRANSMISSION APPROVAL REQUEST RESOURCE)
R4 RADIO RESOURCE (SPECIAL DATA TRANSMISSION APPROVAL RESOURCE)
R5 RADIO RESOURCE (SPECIAL DATA TRANSMISSION RESOURCE)
R6 RADIO RESOURCE (USUAL DATA TRANSMISSION RESOURCE)

### CITATION LIST

PTL 1: Japanese National Publication of International Patent Application No. 2007-527676
NPL 1: 3GPP TS36.211 V13.1.0 (2016-3)
NPL 2: 3GPP TS36.300 V13.3.0 (2016-3)
NPL 3: 3GPP TR22.885 V14.0.0 (2015-12)
NPL 4: 3GPP TR36.912 V13.0.0 (2015-12)

## Claims

1. A wireless communication system comprising:
a base station configured to set a first radio resource which is used for transfer of a first data signal, and a second radio resource of which at least a portion overlaps the first radio resource, the second radio resource having a likelihood of being used for transfer of a second data signal, to be in a radio frame format;
a first terminal configured to transmit the second data signal to a destination that is the base station, using the second radio resource; and
a second terminal configured to, when it is detected that a portion of the first radio source that is allocated from the base station, which overlaps the second radio resource, is used for the transmission of the second data signal, does not perform transmission of the first data signal, which uses the overlapping portion.

2. The wireless communication system according to claim 1,
wherein the second data signal is any one of
a signal that occurs less frequently than the first data signal,
a signal of which lower latency transfer is requested than the first data signal, and
a signal that occurs less frequently than the first data signal and of which the lower latency transfer is requested than the first data signal.

3. The wireless communication system according to claim 1 or 2,
wherein the second terminal is configured to perform the transmission of the first data signal, by using a radio resource that is different from the overlapping portion of the first radio resource that is allocated from the base station.

4. The wireless communication system according to any one of claims 1 to 3,
wherein, in a case where it is not detected that the overlapping portion is used for the transmission of the second data signal, the second terminal is configured to perform the transmission of the first data signal, by using a radio resource that includes the overlapping portion of the first radio source.

5. The wireless communication system according to any one of claims 1 to 4,
wherein the base station is configured to
set a third radio resource that has a likelihood of being used for transfer of a signal with which a request is made for an approval of the transmission of the second data signal, and a fourth radio resource that has a likelihood of being used for transfer of a signal that indicates the approval of the transmission of the second data signal, to be in the radio frame format, and
report pieces of information indicating settings of the second to fourth radio resources.

6. The wireless communication system according to claim 5,
wherein the first terminal is configured to
transmit the signal with which a request is made for the approval of the transmission, to the destination that is the base station, using the third radio resource, when the second data signal occurs, and
transmit the second data signal using the second radio resource, when the signal that indicates the approval of the transmission is received using the fourth radio resource, and
wherein the second terminal is configured to
detect that the overlapping portion is used for the transmission of the second data signal, by detecting the reception of the signal that indicates the approval of the transmission, using the fourth radio resource.

7. The wireless communication system according to claim 5 or 6,
wherein, regarding reporting of the pieces of information that indicates the settings of the second to fourth radio resources are reported, each of the second to fourth radio resources is reported.

8. The wireless communication system according to claim 5 or 6,
wherein all of or, one or several of, the pieces of information on the second to fourth radio resources are associated, and
wherein regarding the reporting of the pieces of information indicating the settings, respectively, of the second to fourth radio resources, one or several of the pieces of information that are associated are reported.

9. The wireless communication system according to any one of claims 1 to 8,
wherein the base station is configured to
notify the second terminal of a flag information indicating that the portion which overlaps the second radio resource is included in the first radio resource, in a procedure for allocating the first radio resource to the second terminal.

10. A base station comprising:
a setting unit configured to set a first radio resource which is used for transfer of a first data signal, and a second radio resource of which at least a portion overlaps the first radio resource, the second radio resource having a likelihood of being used for transfer of a second data signal, to be in a radio frame format; and
a reception unit configured to receive the second data signal that the first terminal transmits using the second radio resource, and do not perform reception processing of the first data signal in a portion of the first radio source that is allocated to the second terminal, which overlaps the second radio resource.

11. The base station according to claim 10,
wherein the second data signal is any one of
a signal that occurs less frequently than the first data signal,
a signal of which lower latency transfer is requested than the first data signal, and
a signal that occurs less frequently than the first data signal and of which the lower latency transfer is requested than the first data signal.

12. The base station according to claim 10 or 11,
wherein the reception unit is configured to perform the reception processing of the first data signal that the second terminal transmits using a radio resource which is different from the portion of the first radio resource that is allocated to the second terminal, which overlaps the second radio source.

13. The base station to any one of claims 10 to 12,
wherein the setting unit is configured to
set a third radio resource that has a likelihood of being used for transfer of a signal with which a request is made for an approval of the transmission of the second data signal, and a fourth radio resource that has a likelihood of being used for transfer of a signal that indicates the approval of the transmission of the second data signal, to be in the radio frame format, and
wherein the base station includes a report unit configured to report pieces of information indicating settings of the second to fourth radio resources.

14. The base station according to claim 13, further comprising:
a transmission unit configured to transmit a signal which indicates the approval of the transmission, by using the fourth radio resource of which reception processing is performed by the first and second terminals, with regard to reception from the first terminal, of the signal with which a request is made for the approval of the transmission.

15. A terminal comprising:
a transmission unit configured to transmit a first data signal to a destination that is a base station, by using a first radio resource that is allocated in a radio frame format from the base station; and
a control unit configured to control the transmission unit in such a manner that the transmission of the first data signal which uses an overlapping portion is not performed, when it is detected that the portion of the first radio resource, which is set by the base station to be in the radio frame format, and which overlaps a second radio resource having a likelihood of being used for transfer of a second data signal, is used for transmission of the second data signal.

16. The terminal according to claim 15,
wherein the second data signal is any one of
a signal that occurs less frequently than the first data signal,
a signal of which lower latency transfer is requested than the first data signal, and
a signal that occurs less frequently than the first data signal and of which the lower latency transfer is requested than the first data signal.

17. The terminal according to claim 15 or 16,
wherein the control unit is configured to
control the transmission unit in such a manner that the transmission of the first data signal is performed, by using a radio resource that is different from the overlapping portion of the first radio resource that is allocated from the base station.

18. The terminal according to any one of claims 15 to 17,
wherein the control unit is configured to
control the transmission unit in such a manner that the transmission of the first data signal is performed, by using a radio resource that includes the overlapping portion of the first radio source, in a case where it is not detected that the overlapping portion is used for the transmission of the second data signal.
